# EUROPÄISCHE PATENTSCHRIFT

(11) **EP 4 313 420 B1**
(45) Veröffentlichungstag und Bekanntmachung des Hinweises auf die Patenterteilung: **19.02.2025**
(21) Anmeldenummer: 22716958.8
(22) Anmeldetag: 22.03.2022
(51) Int. Cl.: B29L 31/00, B01L 9/00, B01L 3/02, B29C 45/76, G01B 11/24, G01N 35/10

(54) **VERFAHREN UND VORRICHTUNG ZUM ÜBERPRÜFEN VON PIPETTENSPITZEN**
METHOD AND DEVICE FOR TESTING PIPETTE TIPS
PROCÉDÉ ET DISPOSITIF DE VÉRIFICATION DES POINTS DE PIPETTES

(30) Priorität: 22.03.2021 EP 21164105
(43) Veröffentlichungstag der Anmeldung: 07.02.2024
(73) Patentinhaber: Roche Diagnostics International AG, 6343 Rotkreuz (CH)
(72) Erfinder: HESS, Peter, 5628 Aristau (CH); ALBIN, Samuel, 7157 Siat (CH); WENZIN, Placi, 8880 Walenstadt (CH); CADUFF, Fabian, 7000 Chur (CH)
(74) Vertreter: Hepp Wenger Ryffel AG
(86) Internationale Anmeldenummer: PCT/EP2022/057534
(87) Internationale Veröffentlichungsnummer: WO 2022/200375

(56) Entgegenhaltungen:
- EP-A1- 2 913 107
- EP-A1- 2 913 107
- EP-A1- 3 127 853
- EP-A1- 3 967 472
- EP-A1- 3 967 472
- WO-A1-2020/079170
- WO-A1-2020/079170
- DE-A1- 102017 012 225
- DE-A1- 102018 120 963
- US-A1- 2004 108 171
- US-A1- 2018 238 096

## Beschreibung

Die vorliegende Erfindung betrifft ein Verfahren sowie eine Vorrichtung zum Überprüfen von Pipettenspitzen sowie eine Spritzgiessanlage umfassend wenigstens eine Vorrichtung zum Überprüfen von Pipettenspitzen wie nachfolgend beschrieben.

Pipettenspitzen werden üblicherweise im Spritzgussverfahren hergestellt, wobei die zur Anwendung kommenden Spritzgussvorrichtungen üblicherweise eine Mehrzahl von kreisförmig angeordneten Kavitäten aufweisen, die jeweils von einem Spritzgusswerkzeug begrenzt sind. In der Praxis besteht das Problem, dass ein Werkzeuginnenteil durch die beim Spritzvorgang auftretenden Druckverhältnisse im Laufe der Zeit aus einer ursprünglichen Optimalposition radial herausverstellt wird, sodass sich mit der Zeit die Wandstärke der hergestellten Pipettenspitzen leicht verändert. Dies wiederum führt dazu, dass die unterschiedlichen Wandabschnitte der gespritzten Pipettenspitzen unterschiedlich schnell abkühlen, was zu einem minimalen Verzug (Krümmung der Längsachse) der Pipettenspitzen führt, wobei die Pipettenspitzenauslassöffnung von zu einem späteren Zeitpunkt hergestellten Pipettenspitzen weiter von einer zentrischen Optimalposition abweicht, als die nach einem Werkzeugwechsel hergestellten Pipettenspitzen. Überschreitet diese Abweichung ein bestimmtes Mass, sind die Pipettenspitzen nicht mehr verwendbar, da diese nicht mehr zum exakten Abmessen der zu dosierenden Flüssigkeit geeignet sind und/oder nicht mehr zielgenau von einem automatisierten Analyseapparat oder sonstigen Handhabungsvorrichtungen angesteuert werden können.

Als Qualitätssicherungsmassnahme bei der Pipettenspitzenherstellung ist es aus dem Stand der Technik bekannt, beispielsweise aus der WO 00/52987 A1, einzelne Pipettenspitzen mittels eines Greifers zu einer Kamera zu transportieren, welche Bilddaten aus unterschiedlichen Rotationswinkeln um eine Längsachse der Pipettenspitze erfasst. Diese Bilddaten werden anschliessend im Hinblick auf die Einhaltung vorgegebener Toleranzen analysiert. Es hat sich jedoch herausgestellt, dass die Analyse der seitlich aufgenommenen Bilddaten hinsichtlich einer sicheren Fehlererkennung problematisch ist, insbesondere weil auch gerade, d.h. nicht verzogene Pipettenspitzen als fehlerhaft erkannt werden, wenn diese nicht optimal gerade im Greifer aufgenommen sind. Darüber hinaus ist nachteilig, dass die vereinzelte Zufuhr von Pipettenspitzen zu einer einzigen Kamera dazu führt, dass die Qualitätssicherungsmassnahme sehr zeitaufwändig ist.

Aus der EP 2913107 A1 ist ein Verfahren zur Beurteilung eines Pipettenspitzenverzugs bekannt, bei welchem der Verzug mittels Bilddaten erfasst wird. Hierbei werden in Bezug auf eine Pipettenspitzengruppe mit einer Mehrzahl von Pipettenspitzen erste und zweite Bilddaten der Pipettenspitzenenden und Pipettenspitzeneinlassöffnungen erfasst, wobei die Blickrichtungen der ersten und zweiten Bilderfassungsmittel einander entgegengesetzt sind, und wobei dann anhand der Abweichungsmasse der Pipettenspitzenauslassöffnungen ein Mittelwert der Abweichungsmasse ermittelt wird. Dieses Verfahren ist einerseits apparativ sehr aufwändig, da separate erste und zweite Bilderfassungsmittel erforderlich sind. Ferner hat sich die Bestimmung der Sollposition der Pipettenspitzenauslassöffnungen mittels der auf die Einlassöffnung des oberen Pipettenspitzenendes ausgerichteten zweiten Bilderfassungsmittel in der Praxis als teilweise schwierig oder fehlerbehaftet erwiesen. So überlagern sich die Toleranzen bei der Bestimmung der Solllage der Pipettenspitze mit den zweiten Bilderfassungsmitteln und die Toleranzen der Bestimmung der Istlage mittels der ersten Bilderfassungsmittel miteinander, was zu Ungenauigkeiten bei der Bestimmung der tatsächlichen Abweichung des Pipettenspitzenverzugs führen kann. Auch wird bei diesem Verfahren beispielsweise eine korrekt geformte Pipettenspitze, welche sich in ihrer Halterung in einer Schieflage befindet, nicht erkannt und als Ausschuss ausgesondert, nur weil wegen der Fehlausrichtung der Pipettenspitze in der Halterung die Abweichung des spitzen Endes der Pipettenspitze von der vorgegebenen Achsrichtung als Mangel bewertet wird.

Um diese Ungenauigkeiten bei der Halterung von Pipettenspitzen zu reduzieren, schlägt die DE 10 2017 012 225 A1 eine Anpresseinrichtung vor, welche durch mechanische Kraftausübung auf die in einer Halterung gehalterte Pipettenspitze eine besonders gut definierte Lage der Pipettenspitze in der Halterung bewirkt. Die mit definiertem Sitz an der Halterung angeordnete Pipettenspitze kann somit zuverlässig und mit geringer Fehlertoleranz der Messung unterzogen werden, wobei die zu diesem Zweck vorgesehene Bilderfassungseinrichtung die Lage des freien Endes der Pipettenspitze erfasst. Der Verzug der Pipettenspitze wird als Lageabweichung eines vorbestimmten Bereichs der in der Halterung gehalterten Pipettenspitze von einer vordefinierten Solllage dieses Bereichs bei einer verzugsfreien Pipettenspitze bestimmt. Nachteilig an diesem Verfahren ist einerseits, dass es aufgrund der Vielzahl an separaten Einrichtungen der Prüfvorrichtung apparativ sehr aufwändig ist. Ferner wird zur gleichzeitigen Überprüfung einer Mehrzahl von Pipettenspitzen eine Art revolvierender Mechanismus zur Zuführung jeweils einer einzelnen Pipettenspitze zur Anpresseinrichtung oder die Verwendung mehrerer Bilderfassungseinrichtungen entsprechend der Anzahl der an der Halterung gehalterten Pipettenspitzen vorgeschlagen, was den apparativen Aufwand und die Kosten einer solchen Prüfeinrichtung weiter erhöht.

Die WO 2020/079170 A1 offenbart ein Verfahren und eine Vorrichtung zum Überprüfen von Pipettenspitzen, wobei ein sich in Achsrichtung erstreckender Referenzbereich einer gehalterten Pipettenspitze durch ein erstes Erfassungsmittel erfasst wird und ausgehend von dem Referenzbereich die Symmetrieachse der Pipettenspitze berechnet wird. Zur Erfassung einer Krümmung oder Schräglage des Spritzgussteils wird die Lage eines in Achsrichtung vom Referenzbereich beabstandeten Symmetrieachsenabschnitts durch ein zweites Erfassungsmittel erfasst und mit der zuvor errechneten Symmetrieachse verglichen. Durch die vereinzelte Zufuhr von Pipettenspitzen zur Vorrichtung bleibt die Überprüfung der Pipettenspitzen jedoch sehr zeitaufwändig.

Ausgehend von dem vorgenannten Stand der Technik liegt der vorliegenden Erfindung die Aufgabe zugrunde, solche und weitere Nachteile des Standes der Technik zu beheben und insbesondere ein vorteilhaftes Verfahren zur Überprüfung der Öffnungen und des Verzugs langgestreckter Spritzgussteile wie insbesondere Pipettenspitzen anzugeben, welches schnell, zuverlässig und mit geringem Aufwand in Bezug auf die dafür erforderliche Prüfvorrichtung durchführbar ist. Ferner liegt der vorliegenden Erfindung die Aufgabe zugrunde, eine für die Durchführung des Verfahrens geeignete Prüfvorrichtung bereitzustellen.

Die Aufgabe wird gelöst durch ein Verfahren zum Überprüfen von Pipettenspitzen, eine Vorrichtung zum Überprüfen von Pipettenspitzen, welche Vorrichtung bevorzugt zur Durchführung des erfindungsgemässen Verfahrens ausgebildet ist, sowie eine Spritzgussanlage umfassend eine erfindungsgemässe Vorrichtung zum Überprüfen von Pipettenspitzen gemäss den unabhängigen Patentansprüchen. Weitere, vorteilhafte Ausführungsformen sind Gegenstand der abhängigen Patentansprüche. Sofern bei der nachfolgenden Beschreibung vorteilhafter Ausführungsformen nicht auf eine bestimmte Ausführungsform des erfindungsgemässen Verfahrens oder auf eine bestimmte Ausführungsform der erfindungsgemässen Vorrichtung Bezug genommen wird, beziehen sich derartige vorteilhafte Ausführungsformen grundsätzlich auf sämtliche der hierin beschriebenen Ausführungsformen des erfindungsgemässen Verfahrens bzw. der erfindungsgemässen Vorrichtung.

Insbesondere wir die Aufgabe durch ein Verfahren zum Überprüfen von sich jeweils entlang einer Längsachse (L) erstreckenden Pipettenspitzen gelöst, wobei das erfindungsgemässe Verfahren die folgenden Schritte umfasst: a) Bereitstellen von Pipettenspitzen, welche in einem ersten Träger angeordnet sind; b) Aufnahme von Pipettenspitzen aus dem ersten Träger durch eine Halteeinrichtung umfassend eine Mehrzahl von Aufnahmeelementen zur Aufnahme jeweils einer Pipettenspitze; c) Erfassen von ersten Bilddaten der jeweiligen Pipettenspitzenauslassöffnungen der durch die Halteeinrichtung aufgenommenen Pipettenspitzen durch eine erste Bilderfassungseinrichtung; d) Erfassen von zweiten Bilddaten der in der Halteeinrichtung gehalterten Pipettenspitzen durch eine zweite Bilderfassungseinrichtung. Die optische Achse der zweiten Bilderfassungseinrichtung ist während der Erfassung der zweiten Bilddaten quer zur jeweiligen Längsachse der in der Halteeinrichtung gehalterten Pipettenspitzen und auf die der zweiten Bilderfassungseinrichtung zugewandten Teilsegmente der jeweiligen Pipettenspitzenmantelflächen der gehalterten Pipettenspitzen ausgerichtet. Dabei werden die zweiten Bilddaten mehrerer der in der Halteeinrichtung gehalterten Pipettenspitzen gleichzeitig erfasst. Vorzugsweise werden die zweiten Bilddaten aller der in der Halteeinrichtung gehalterten Pipettenspitzen gleichzeitig erfasst; e) Ermitteln, ob die ersten und/oder zweiten Bilddaten innerhalb von vordefinierten Zulässigkeitsgrenzen liegen oder nicht. Dies geschieht mit Hilfe einer Datenverarbeitungsanlage; f) Abwerfen derjenigen Pipettenspitzen, deren in Schritt e) ermittelte erste und/oder zweite Bilddaten ausserhalb der vordefinierten Zulässigkeitsgrenzen liegen, in einen Abfallbehälter durch die Halteeinrichtung; g) Abgabe derjenigen Pipettenspitzen, deren in Schritt e) ermittelte erste und zweite Bilddaten innerhalb der vordefinierten Zulässigkeitsgrenzen liegen, in einen zweiten Träger. Bei dem zweiten Träger kann es sich insbesondere um ein Rack handeln.

In einer ersten Ausführungsform des erfindungsgemässen Verfahrens umfasst dieses die folgenden Schritte: a) Bereitstellen von Pipettenspitzen, welche in einem ersten Träger in einer ersten Matrixanordnung von Reihen und Spalten in dem ersten Träger angeordnet sind; b) Aufnahme einer Reihe oder Spalte von Pipettenspitzen aus der ersten Matrixanordnung durch eine Halteeinrichtung umfassend eine Mehrzahl von in einer Reihe angeordneten Aufnahmeelementen zur Aufnahme jeweils einer Pipettenspitze. Die Längsachsen der durch die Aufnahmeelemente gehalterten Pipettenspitzen liegen dabei im Wesentlichen in einer gemeinsamen Ebene; c) Erfassen von ersten Bilddaten der jeweiligen Pipettenspitzenauslassöffnungen der durch die Halteeinrichtung aufgenommenen Pipettenspitzen durch eine erste Bilderfassungseinrichtung. Die optische Achse der ersten Bilderfassungseinrichtung ist dabei während der Erfassung der ersten Bilddaten zur jeweiligen Längsachse der in der Halteeinrichtung gehalterten Pipettenspitzen gleichgerichtet, insbesondere parallel, und auf die Pipettenspitzenauslassöffnungen ausgerichtet; d) Erfassen von zweiten Bilddaten der in der Halteeinrichtung gehalterten Pipettenspitzen durch eine zweite Bilderfassungseinrichtung. Die optische Achse der zweiten Bilderfassungseinrichtung ist dabei während der Erfassung der zweiten Bilddaten im Wesentlichen senkrecht auf die durch die gehalterten Pipettenspitzen definierte Ebene und auf die der zweiten Bilderfassungseinrichtung zugewandten Teilsegmente der jeweiligen Pipettenspitzenmantelflächen der gehalterten Pipettenspitzen ausgerichtet, sodass alle in der Halteeinrichtung gehalterten Pipettenspitzen im Wesentlichen in einer Bildebene der zweiten Bilderfassungseinrichtung angeordnet sind. Die zweiten Bilddaten aller in der Halteeinrichtung gehalterten Pipettenspitzen werden dabei gleichzeitig erfasst; e) Ermitteln, ob die ersten und/oder zweiten Bilddaten innerhalb vordefinierten Zulässigkeitsgrenzen liegen oder nicht, mit Hilfe einer Datenverarbeitungsanlage; f) Abwerfen derjenigen Pipettenspitzen, deren in Schritt e) ermittelte erste und/oder zweite Bilddaten ausserhalb der vordefinierten Zulässigkeitsgrenzen liegen, in einen Abfallbehälter durch die Halteeinrichtung; g) Abgabe derjenigen Pipettenspitzen, deren in Schritt e) ermittelte erste und zweite Bilddaten innerhalb der vordefinierten Zulässigkeitsgrenzen liegen, in einen zweiten Träger mit einer Vielzahl von Löchern in einer zweiten Matrixanordnung von Reihen und Spalten, dessen Löcher zum Halten der abgegebenen Pipettenspitzen geeignet sind. Die Pipettenspitzen werden in Verfahrensschritt g) derart durch die Halteeinrichtung abgegeben, dass die jeweiligen Reihen oder Spalten von Löchern des zweiten Trägers nacheinander aufgefüllt werden, ohne dass dabei zwischen zwei abgegebenen Pipettenspitzen ein oder mehrere leere Löcher verbleiben.

Das erfindungsgemässe Verfahren erlaubt die effiziente Beurteilung sämtlicher Pipettenspitzen zur Feststellung von Abweichungen der Pipettenspitzen von einer vordefinierten Norm mittels zweier Bilderfassungseinrichtungen. Beispielsweise handelt es sich bei der Abweichung der Pipettenspitzen von einer Norm um einen Verzug des Spritzgussteils bzw. um eine Abweichung der Pipettenspitzen von einer gewünschten Form. Eine Normabweichung der Pipettenspitzen wird als Lageabweichung der Pipettenspitzenöffnung bzw. eines vorbestimmten Bereichs der Pipettenspitzenmantelfläche von jeweils vordefinierten Solllagen dieser Bereiche gemessen. Bei jeder Aufnahme wird die theoretische Mittellinie erfasst. Ein systematischer Fehler durch schräg eingespannte Prüflinge, d.h. Pipettenspitzen, kann so ausgefiltert werden. Anders ausgedrückt wird der Verzug einer zu prüfenden Pipettenspitze durch Vergleich mit einer zuvor gemessenen, nichtverzogenen Pipettenspitze gemessen. Unter einer Normabweichung der Pipettenspitze wird ferner auch die Abweichung ihrer Oberflächenbeschaffenheit von einem vorbestimmten Sollwert verstanden. Die Oberflächenbeschaffenheit ist dabei insbesondere durch die An- bzw. Abwesenheit von Kratzern, trüben Stellen, Perforationen oder sonstigen Verletzungen gekennzeichnet. Durch die Anordnung der gehalterten Pipettenspitzen in einer einzigen Bildebene der zweiten Bilderfassungseinrichtung kann die Erfassung der zweiten Bilddaten besonders präzise erfolgen. Das Drehen der Pipettenspitzen an ihren jeweiligen Aufnahmeelementen ermöglicht es, die Geometrie der Pipettenspitzen genauer zu erfassen.

Im Rahmen der vorliegenden Erfindung wird unter dem Begriff Matrixanordnung eine, bevorzugt regelmässige, Anordnung von zum Halten jeweils einer Pipettenspitze ausgebildeten Löchern verstanden, wobei die Löcher in Reihen und Spalten angeordnet sind. Jede Reihe umfasst dabei eine Anzahl von n Löchern und jede Spalte umfasst dabei eine Anzahl von m Löchern, sodass sich die Anzahl der in der Matrixanordnung enthaltenen Löcher aus dem Produkt aus n und m ergibt. Derartige Matrixanordnungen liegen beispielsweise in den aus dem Stand der Technik bekannten Behältern für Pipettenspitzen, sogenannten Racks, vor.

Unter dem Begriff Bilderfassungseinrichtung wird im Rahmen der vorliegenden Erfindung eine Kamera, insbesondere eine Kamera mit Objektiv und geeigneter Beleuchtung verstanden. Als Objektiv eignen sich insbesondere telezentrische Objektive, da diese negative Randeffekte von runden Objekten, wie langgestreckten Spritzgussteilen mit Symmetrieachse, insbesondere wie Pipettenspitzen, stark reduzieren.

Es hat sich herausgestellt, dass der Verzug von Pipettenspitzen noch einige Zeit nach dem eigentlichen Herstellungsprozess in einer Spritzgiessanlage voranschreitet, weshalb es für die Qualitätssicherung vorteilhaft ist, die produzierten Pipettenspitzen zunächst für eine gewisse Zeit, insbesondere für eine Zeit von zwei Tagen, vollständig auskühlen und eine endgültige Form annehmen zu lassen. Um während dieser Zeit zum Zweck der Zwischenlagerung der zu prüfenden Pipettenspitzen nicht teure und weniger verfügbare Werkstückträger der Spritzgiessanlage vorhalten zu müssen, können die zu prüfenden Pipettenspitzen in Racks zwischengelagert werden.

In einer vorteilhaften Weiterbildung der ersten Ausführungsform des erfindungsgemässen Verfahrens handelt es sich bei dem ersten Träger, der Pipettenspitzen in einer ersten Matrixanordnung von Reihen und Spalten bereitstellt, um ein Rack. Analog dazu handelt es sich bei dem zweiten Träger um ein Rack aufweisend eine Vielzahl von Löchern, welche in einer zweiten Matrixanordnung von Reihen und Spalten angeordnet sind.

Es ist erfindungsgemäss denkbar, dass die zu prüfenden Pipettenspitzen durch die Halteeinrichtung in Schritt b) aus dem ersten Träger aufgenommen und die geprüften Pipettenspitzen in Schritt g) zurück an den ersten Träger abgegeben werden, wobei zum Ersetzen der gegebenenfalls in Schritt f) abgeworfenen Pipettenspitzen und zum Auffüllen des ersten Trägers Pipettenspitzen aus einem Reservoir von geprüften Pipettenspitzen verwendet werden.

Erfindungsgemäss ist es ebenfalls denkbar, dass die zu prüfenden Pipettenspitzen durch die Halteeinrichtung in Schritt b) aus dem ersten Träger aufgenommenen werden und zunächst lediglich die ersten Bilddaten der durch die Halteeinrichtung aufgenommenen Pipettenspitzen in Schritt c) erfasst werden, bevor die in Schritt c) geprüften Pipettenspitzen in einem Verfahrensschritt g') an den ersten Träger zurückgegeben werden. Insbesondere ist es dabei auch denkbar, dass die zu prüfenden Pipettenspitzen beim Erfassen der ersten Bilddaten durch die erste Bilderfassungseinrichtung in Schritt c) noch nicht vollständig ausgekühlt sind. Es hat sich überraschend herausgestellt, dass Kernbrüche bereits an noch nicht vollständig ausgekühlten Pipettenspitzen zuverlässig durch Erfassung der ersten Bilddaten erkannt werden können. Somit lassen sich Kernbrüche in der Spritzgussanlage deutlich früher erkennen und beheben.

Im Anschluss an Schritt g') werden die vorgängig bereits teilweise geprüften Pipettenspitzen erneut in Schritt b) durch die Halteeinrichtung aus dem ersten Träger aufgenommen, woraufhin die Pipettenspitzen zur vollständigen Prüfung die Verfahrensschritte c) bis g) oder d) bis g) durchlaufen.

In einer bevorzugten Weiterbildung der ersten Ausführungsform des erfindungsgemässen Verfahrens entnimmt die Halteeinrichtung der ersten Matrixanordnung in Schritt b) eine komplette Reihe oder eine komplette Spalte von Pipettenspitzen. Bevorzugt entnimmt die Halteeinrichtung in Schritt b) sämtliche Pipettenspitzen einer Reihe oder einer Spalte eines Racks.

Dadurch wird die Effizienz des erfindungsgemässen Verfahrens optimiert, da die durch die Aufnahmeelemente der Halteeinrichtung gehalterten Pipettenspitzen in den nachfolgenden Verfahrensschritten c) und d) jeweils gemeinsam geprüft werden, wie nachfolgend noch näher erläutert wird.

In einer bevorzugten Weiterbildung der ersten Ausführungsform des erfindungsgemässen Verfahrens stimmt die Anzahl der Aufnahmeelemente der Halteeinrichtung mit der Anzahl der in einer Reihe oder Spalte der ersten Matrixanordnung bereitgestellten Pipettenspitzen und/oder der zweiten Matrixanordnung von Löchern im zweiten Träger überein. Mit anderen Worten ist die Halteeinrichtung auf die im erfindungsgemässen Verfahren verwendeten ersten und/oder zweiten Träger abgestimmt, wodurch sich das erfindungsgemässe Verfahren besonders kosteneffizient durchführen lässt.

Es hat sich überraschend herausgestellt, dass die zweiten Bilddaten auch zuverlässig und zufriedenstellend erfasst werden können, wenn die Längsachsen (L) der durch die Aufnahmeelemente in der Halteeinrichtung gehalterten Pipettenspitzen nicht im Wesentlichen in einer gemeinsamen Ebene liegen.

In einer zweiten Ausführungsform des erfindungsgemässen Verfahrens sind die in Schritt a) bereitgestellten Pipettenspitzen im ersten Träger in wenigstens einer kreisförmigen Anordnung angeordnet. Vorzugsweise sind die in Schritt a) bereitgestellten Pipettenspitzen in wenigstens einer kreisförmigen Anordnung von acht im Umfangsrichtung der kreisförmigen Anordnung gleichmässig voneinander beabstandeten Pipettenspitzen angeordnet. In dieser Ausführungsform nimmt die Halteeinrichtung in Schritt b) eine kreisförmige Anordnung, insbesondere eine komplette kreisförmige Anordnung, von Pipettenspitzen aus dem ersten Träger auf. Optional wird die Halteeinrichtung vor dem Erfassen der zweiten Bilddaten in Schritt d) derart um ihre Rotationsachse um einen Drehwinkel β gedreht, dass die Konturen zumindest eines Teils der in der Halteeinrichtung gehalterten Pipettenspitzen durch die zweite Bilderfassungseinrichtung erfassbar sind. Vorzugsweise bewirkt die Drehung der Halteeinrichtung um ihre Rotationsachse, dass die Konturen aller in der Halteeinrichtung gehalterten Pipettenspitzen durch die zweite Bilderfassungseinrichtung erfassbar sind.

Diese zweite Ausführungsform weist die zusätzlichen Vorteile auf, dass durch die Aufnahme von Pipettenspitzen in einer kreisförmigen Anordnung auf eine der erfindungsgemässen Vorrichtung vorgelagerte Automation, welche die kreisförmige Anordnung, wie sie üblicherweise im Werkzeug einer Spritzgussmaschine vorliegt, in eine lineare Anordnung überführt, verzichtet werden kann. Die Prüfung der Pipettenspitzen kann somit unter Beibehaltung der Werkzeugordnung der Spritzgussmaschine erfolgen, ohne vorherige Umorientierung der Pipettenspitzen. Dadurch lassen sich der konstruktive und finanzielle Aufwand sowie der Platzbedarf der erfindungsgemässen Vorrichtung signifikant reduzieren.

Unter der "Rotationsachse der Halteeinrichtung" wird im Rahmen der vorliegenden Erfindung die sich in Richtung der durch die Halteeinrichtung aufgenommenen Pipettenspitzen erstreckende Rotationsachse verstanden.

Der Ausdruck "erfassbare Konturen" meint im Rahmen der vorliegenden Erfindung insbesondere die sich entlang der Längsrichtung der Pipettenspitze erstreckenden Konturen, sodass die jeweilige Bilderfassungseinrichtung Pipettenspitzen, welche in der Halteeinrichtung gehaltert sind und sich in der optischen Achse der jeweiligen Bilderfassungseinrichtung befinden, voneinander unterscheiden kann. Anders ausgedrückt sind Pipettenspitzen, deren Konturen erfassbar sind, nicht so durch eine oder mehrere andere Pipettenspitzen in der optischen Achse der jeweiligen Bilderfassungseinrichtung teilweise oder gar vollständig verdeckt oder überlagert, dass sie ununterscheidbar wären. Bevorzugt sind die Konturen vollständig erfassbar, d.h. über im Wesentlichen die gesamte Länge der jeweiligen Pipettenspitzen.

In einer vorteilhaften Weiterbildung der zweiten Ausführungsform des erfindungsgemässen Verfahrens wird die Halteeinrichtung während der Erfassung der zweiten Bilddaten in Schritt d) um ihre Rotationsachse gedreht. Die Halteeinrichtung führt dabei während der Erfassung der zweiten Bilddaten bevorzugt zumindest eine dreiviertel Umdrehung um ihre Rotationsachse aus, also eine Drehung um zumindest 270°. Die Drehung der Halteeinrichtung um ihre Rotationsachse ermöglicht es, die zweiten Bilddaten besonders einfach und effizient aufzunehmen, da in diesem Fall auf weitere Antriebsmittel zum Drehen der einzelnen Aufnahmeelemente verzichtet werden kann, was die Komplexität und den Wartungsbedarf der Halteeinrichtung deutlich reduziert.

In einer vorteilhaften Weiterbildung der zweiten Ausführungsform des erfindungsgemässen Verfahrens, in der die Halteeinrichtung während der Erfassung der zweiten Bilddaten in Schritt d) um ihre Rotationsachse gedreht wird, ist die optische Achse der zweiten Bilderfassungseinrichtung während der Erfassung der zweiten Bilddaten in Schritt d) ferner auf eine an der Halteeinrichtung befestigte und im Zentrum der kreisförmigen Anordnung von Pipettenspitzen angeordnete Beleuchtungseinrichtung ausgerichtet. Die Beleuchtungseinrichtung ist dabei derart ausgebildet, dass sie beim Erfassen der zweiten Bilddaten in Schritt d) Licht in Richtung der zweiten Bilderfassungseinrichtung aussendet.

In einer vorteilhaften Weiterbildung der zweiten Ausführungsform des erfindungsgemässen Verfahrens werden die zweiten Bilddaten der in der Halteeinrichtung gehalterten Pipettenspitzen in Schritt d) zusätzlich durch eine dritte Bilderfassungseinrichtung erfasst. Die optische Achse der dritten Bilderfassungseinrichtung ist während der Erfassung der zweiten Bilddaten im Wesentlichen senkrecht zur optischen Achse der zweiten Bilderfassungseinrichtung und auf die der dritten Bilderfassungseinrichtung zugewandten Teilsegmente der jeweiligen Pipettenspitzenmantelflächen der gehalterten Pipettenspitzen ausgerichtet.

In diesem Zusammenhang kann es - je nach Anordnung der in der Halteeinrichtung gehalterten Pipettenspitzen im Strahlengang der zweiten und dritten Bilderfassungseinrichtung - erforderlich oder vorteilhaft sein, die Halteeinrichtung vor dem Erfassen der zweiten Bilddaten in Schritt d) derart um ihre Rotationsachse um einen Drehwinkel β zu drehen, dass die Konturen eines ersten Teils der in der Halteeinrichtung gehalterten Pipettenspitzen, bevorzugt vollständig, durch die zweite Bilderfassungseinrichtung erfassbar sind, und dass die Konturen eines zweiten Teils der in der Halteeinrichtung gehalterten Pipettenspitzen, bevorzugt vollständig, durch die dritte Bilderfassungseinrichtung erfassbar sind.

Das Vorsehen einer weiteren Bilderfassungseinrichtung, d.h. der dritten Bilderfassungseinrichtung, zum Erfassen der zweiten Bilddaten ermöglicht es, auch beim Vorliegen von in Umlaufrichtung der kreisförmigen Anordnung nahe beieinanderliegende Pipettenspitzen, bei denen eine einzige Bilderfassungseinrichtung, d.h. die zweite Bilderfassungseinrichtung, zwischen den im Strahlengang benachbart abgebildeten Pipettenspitzen, insbesondere im Bereich der jeweiligen Aufnahmeelemente, links und rechts bezüglich der Längsachse der jeweiligen Pipettenspitzen keinen Spalt mehr erkennen könnte, zuverlässig prüfen zu können.

In einer vorteilhaften Weiterbildung der zweiten Ausführungsform des erfindungsgemässen Verfahrens ist an der Halteeinrichtung eine Beleuchtungseinrichtung befestigt, welche die kreisförmige Anordnung von Pipettenspitzen an der Halteeinrichtung in zwei Hälften teilt. Die Beleuchtungseinrichtung weist zwei planparallele Lichtaussendeflächen zum Aussenden von Licht in Richtung der zweiten Bilderfassungseinrichtung und entgegengesetzt zu dieser Richtung auf. Die optische Achse der zweiten Bilderfassungseinrichtung ist während der Erfassung der zweiten Bilddaten in Schritt d) senkrecht auf die an der Halteeinrichtung befestigte Beleuchtungseinrichtung ausgerichtet. Es werden zunächst die zweiten Bilddaten der einen Hälfte der Pipettenspitzen erfasst und die Halteeinrichtung wird anschliessend vor der Erfassung der zweiten Bilddaten der anderen Hälfte der Pipettenspitzen um 180° um ihre Rotationsachse gedreht. Alternativ dazu kann eine weitere Bilderfassungseinrichtung zum Erfassen von zweiten Bilddaten der in der Halteeinrichtung gehalterten Pipettenspitzen vorgesehen sein. Die optische Achse dieser weiteren Bilderfassungseinrichtung ist gegengleich zur optischen Achse der zweiten Bilderfassungseinrichtung ausgerichtet. Somit werden die zweiten Bilddaten beider Hälften der kreisförmigen Anordnung von Pipettenspitzen zeitgleich erfasst.

Um die Bilddaten schnell und effizient erfassen zu können, wird die Position der Pipettenspitzen mit einer Messeinrichtung detektiert und die erste Bilderfassungseinrichtung so getriggert.

In einer bevorzugten Ausführungsform des erfindungsgemässen Verfahrens werden die ersten Bilddaten in Schritt c) beim Bewegen der in der Halteeinrichtung gehalterten Pipettenspitzen quer zur optischen Achse der ersten Bilderfassungseinrichtung und durch die optische Achse der ersten Bilderfassungseinrichtung relativ zueinander erfasst. Das Eintreten der jeweiligen Pipettenspitzen, insbesondere der jeweiligen Pipettenspitzenauslassöffnungen, in die optische Achse der ersten Bilderfassungseinrichtung wird dabei durch eine Messeinrichtung festgestellt und löst das Erfassen der ersten Bilddaten durch die erste Bilderfassungseinrichtung aus. Bei der Messeinrichtung zum Erfassen des Eintritts der jeweiligen Pipettenspitzen in die optische Achse der ersten Bilderfassungseinrichtung handelt es sich beispielsweise um eine Lichtschranke. Die Lichtschranke ist beispielsweise quer zur Längsachse der Pipettenspitzen und auf die jeweils durch die Pipettenspitzenauslassöffnung gerichtet, sodass beim Unterbruch der Lichtschranke das Erfassen der ersten Bilddaten durch die erste Bilderfassungseinrichtung ausgelöst wird. Es ist erfindungsgemäss selbstverständlich auch denkbar, dass die Messeinrichtung zum Erfassen des Eintritts der jeweiligen Pipettenspitzen in die optische Achse der ersten Bilderfassungseinrichtung nicht durch die optische Achse der ersten Bilderfassungseinrichtung verläuft, sondern der ersten Bilderfassungseinrichtung in Bewegungsrichtung der Halteeinrichtung vorgelagert angeordnet ist. In diesem Fall lässt sich das Auslösen der Erfassung der ersten Bilddaten durch die Wegstrecke zwischen der Messeinrichtung und der optischen Achse der ersten Bilderfassungseinrichtung sowie der Bewegungsgeschwindigkeit der Halteeinrichtung und der ersten Bilderfassungseinrichtung relativ zueinander berechnen bzw. einstellen.

Insbesondere wird lediglich die Halteeinrichtung bewegt und die erste Bilderfassungseinrichtung verbleibt ortsfest, sodass die jeweiligen Pipettenspitzenauslassöffnungen der in der Halteeinrichtung gehalterten Pipettenspitzen im Wesentlichen in einer einzigen Bildebene der ersten Bilderfassungseinrichtung an der ersten Bilderfassungseinrichtung vorbeigeführt werden.

Dadurch können alle in der Halteeinrichtung gehalterten Pipettenspitzen, insbesondere die jeweiligen Pipettenspitzenauslassöffnungen, in einem Verfahrensschritt geprüft werden, was die Geschwindigkeit der Überprüfung erhöht. Das Vorbeiführen der Pipettenspitzenauslassöffnungen in im Wesentlichen einer einzigen Bildebene der ersten Bilderfassungseinrichtung erhöht darüber hinaus die Genauigkeit der Bilderfassung.

In einer bevorzugten Ausführungsform des erfindungsgemässen Verfahrens umfasst Schritt d) die folgenden Verfahrensschritte: i. Aufnehmen eines ersten Bildes der in der Halteeinrichtung gehalterten Pipettenspitzen. Die Pipettenspitzen befinden sich dabei jeweils in einer ersten Position; ii. Drehen der in der Halteeinrichtung gehalterten Pipettenspitzen um ihre Längsachse um einen vorbestimmten Drehwinkel α in eine zweite Position; iii. Aufnehmen eines zweiten Bildes der in der Halteeinrichtung gehalterten Pipettenspitzen. Die Pipettenspitzen befinden sich dabei jeweils in der zweiten Position; Der Drehwinkel α zwischen der ersten Position und der zweiten Position der Pipettenspitzen beträgt dabei wenigstens im Wesentlichen 90°. Bevorzugt beträgt der Drehwinkel α zwischen der ersten Position und der zweiten Position der Pipettenspitzen zwischen im Wesentlichen 90° und im Wesentlichen 180°. Besonders bevorzugt beträgt der Drehwinkel α zwischen der ersten Position und der zweiten Position der Pipettenspitzen im Wesentlichen 180°.

Daraus ergibt sich der Vorteil, dass die Rundlaufprüfung sämtlicher in der Halteeinrichtung gehalterter Pipettenspitzen auf einmal, d.h. schnell, und durch die jeweilige Drehung der Pipettenspitzen um wenigstens im Wesentlichen 90° auch besonders genau erfolgen kann. Die Genauigkeit der Messung lässt sich durch eine weitere Drehung, d.h. einen grösseren Drehwinkel α zwischen der ersten Position und der zweiten Position der Pipettenspitzen, weiter erhöhen. Dies ist insbesondere dann der Fall, wenn zwischen der ersten Position und der zweiten Position weitere Bilder der Pipettenspitzen in Zwischenpositionen aufgenommen werden.

Bevorzugt werden die Pipettenspitzen zusätzlich zur ersten Position und zur zweiten Position zum Aufnehmen weiterer Bilder in eine der Anzahl der weiteren Bilder entsprechende Anzahl von Zwischenpositionen gedreht. Diese Zwischenpositionen liegen zwischen der ersten Position und der zweiten Position. Mit anderen Worten werden die ein oder mehreren Zwischenpositionen, ausgehend von der ersten Position, durch Drehen der Pipettenspitzen um einen Drehwinkel α' erreicht, wobei der Drehwinkel α' zwischen 0° und 180° beträgt. Die Zwischenpositionen sind darüber hinaus bevorzugt gleichmässig zwischen der ersten Position und der zweiten Position verteilt.

Durch die Aufnahme weiterer Bilder durch die zweite Bilderfassungseinrichtung wird die Genauigkeit der Überprüfung erhöht.

Bevorzugt beträgt die Anzahl an Zwischenposition und die Anzahl weiterer Bilder ein bis vier, wodurch ein besonders günstiges Verhältnis zwischen Messgenauigkeit, erfasster und zu verarbeitender Datenmenge und Schnelligkeit des Verfahrens erreicht wird.

In einer bevorzugten Ausführungsform des erfindungsgemässen Verfahrens werden die Pipettenspitzen jeweils kraftschlüssig an den Aufnahmeelementen der Halteeinrichtung gehaltert. Die kraftschlüssige Verbindung kann in einer besonders effizienten und zuverlässigen Weise durch Beaufschlagung der Pipettenspitzen mit Unterdruck erfolgen.

In einer bevorzugten Ausführungsform des erfindungsgemässen Verfahrens sind die Pipettenspitzen beim Erfassen der zweiten Bilddaten in Schritt d) zwischen der zweiten Bildeinfassungseinrichtung und einer fest relativ zur zweiten Bilderfassungseinrichtung angeordneten Beleuchtungseinrichtung positioniert. Die Beleuchtungseinrichtung sendet dabei Licht auf die zweite Bilderfassungseinrichtung aus, in die zur optischen Achse der zweiten Bilderfassungseinrichtung entgegengesetzte Richtung.

Hierdurch lässt sich der Kontrast der im Strahlengang der zweiten Bilderfassungseinrichtung positionierten Pipettenspitzen bezogen auf den durch die Beleuchtungseinrichtung gebildeten Bildhintergrund erhöhen, was die Genauigkeit der Überprüfung der Pipettenspitzen in Schritt d) weiter erhöht.

In einer bevorzugten Ausführungsform des erfindungsgemässen Verfahrens steuert die Datenverarbeitungsanlage eine Bewegungseinrichtung zum gesteuerten motorischen Bewegen der Halteeinrichtung in Richtung einer X-, Y- und Z-Raumachse an. Insbesondere wird die Bewegungseinrichtung nur zum gesteuerten motorischen Bewegen der Halteeinrichtung in Richtung einer X- und Y-Raumachse angesteuert. Durch eine entsprechend geeignete Anordnung der in den einzelnen Verfahrensschritten durch die Halteeinrichtung angesteuerten Positionen lässt sich das Bewegungserfordernis der Halteeinrichtung auf zwei Dimensionen reduzieren, was die Komplexität des Verfahrens sowie der zur Durchführung des Verfahrens verwendeten Vorrichtung reduziert und dadurch zu geringeren Anschaffungs- und Betriebskosten führt.

In einer bevorzugten Ausführungsform des erfindungsgemässen Verfahrens umfasst die Datenverarbeitungsanlage eine Benutzerschnittstelle und das Verfahren den zusätzlichen Verfahrensschritt: h) Auswählen von wenigstens einem Aufnahmeelement der Halteeinrichtung durch einen Benutzer, wobei die an den ausgewählten Aufnahmeelementen gehalterten Pipettenspitzen in Folge der Auswahl unabhängig von den erfassten ersten und zweiten Bilddaten in Schritt f) als Ausschuss verworfen werden. Schritt h) wird dabei vor irgendeinem der Schritte a) bis f) durchgeführt.

Das Vorsehen einer Benutzerschnittstelle, welche die manuelle Auswahl wenigstens eines Aufnahmeelements der Halteeinrichtung bzw. die Abwahl der jeweils an diesem oder diesen Aufnahmeelementen gehalterten Pipettenspitzen durch einen Benutzer erlaubt, bringt den Vorteil, dass die abgewählten Pipettenspitzen - unabhängig von den in Schritt c) und/oder Schritt d) erfassten Bilddaten - in Schritt f) des erfindungsgemässen Verfahrens als Ausschuss behandelt werden können. Dies kann beispielsweise vorteilhaft sein, wenn bereits aus einem dem erfindungsgemässen Verfahren vorgelagerten Verfahren bekannt ist, dass bestimmte Positionen der ersten Matrixanordnung fehlerhafte Pipettenspitzen enthalten. Ohne sich auf diese Erklärung beschränken zu wollen wird davon ausgegangen, dass das Spritzgiessen einzelner Ausschuss produzierender Kavitäten nicht einfach gestoppt werden kann, da der thermische Haushalt des Spritzgusswerkzeuges ansonsten zu stark durcheinandergeraten würde. Die manuelle Auswahl durch den Benutzer stellt somit ein zweites Sicherheitsinstrument dar, welches sicherstellt, dass die betreffenden Pipettenspitzen nicht in den zweiten Träger abgegeben werden.

In einer bevorzugten Ausführungsform des erfindungsgemässen Verfahrens schliesst Schritt d) insbesondere auch eine Oberflächeninspektion der zu prüfenden Pipettenspitzen zum Erkennen von Abweichungen der Pipettenspitzenoberflächen von einer vordefinierten Norm mit ein. Zu diesem Zweck können die zweite Bilderfassungseinrichtung, die optional vorhandene dritte Bilderfassungseinrichtung und/oder eine oder mehrere weitere Bilderfassungseinrichtungen, deren jeweilige optische Achsen quer zur Längsachse der in der Halteeinrichtung aufgenommenen Pipettenspitzen und auf die der jeweiligen Bilderfassungseinrichtung zugewandten Teilsegmente der Pipettenspitzenmantelflächen ausgerichtet sind, verwendet werden.

Die Aufgabe wird weiter gelöst durch eine Vorrichtung zum Überprüfen von sich jeweils entlang einer Längsachse erstreckenden Pipettenspitzen, welche Vorrichtung insbesondere zur Durchführung des hierin beschriebenen Verfahrens zum Überprüfen von Pipettenspitzen ausgebildet ist.

Insbesondere wird die Aufgabe gelöst durch eine Vorrichtung umfassend eine zur Bereitstellung eines ersten Trägers enthaltend Pipettenspitzen ausgebildete Aufnahmeposition sowie eine Halteeinrichtung zum Aufnahmen von Pipettenspitzen aus dem an der Aufnahmeposition bereitgestellten ersten Träger. Die Halteeinrichtung umfasst hierzu eine Mehrzahl von Aufnahmeelementen, welche zur Aufnahme jeweils einer Pipettenspitze ausgebildet sind. Die erfindungsgemässe Vorrichtung umfasst ferner eine erste Bilderfassungseinrichtung zum Erfassen von ersten Bilddaten der jeweiligen Pipettenspitzenauslassöffnungen der durch die Halteeinrichtung aufgenommenen Pipettenspitzen sowie eine zweite Bilderfassungseinrichtung zum Erfassen von zweiten Bilddaten der in der Halteeinrichtung gehalterten Pipettenspitzen. Es ist ferner eine Datenverarbeitungsanlage vorhanden, welche signalleitend mit der ersten Bilderfassungseinrichtung, der zweiten Bilderfassungseinrichtung und der Halteeinrichtung verbunden ist. In der Datenverarbeitungsanlage sind Zulässigkeitsgrenzen für die ersten und/oder zweiten Bilddaten vordefiniert, d.h. hinterlegt. Die erfindungsgemässe Vorrichtung umfasst weiter einen zur Aufnahme von durch die Halteeinrichtung abgeworfenen Pipettenspitzen ausgebildeten Abfallbehälter sowie eine Abgabeposition, auf der ein zweiter Träger bereitstellbar ist. Die erfindungsgemässe Vorrichtung weist Mittel zum Ausrichten der optischen Achse der ersten Bilderfassungseinrichtung parallel zur jeweiligen Längsachse der in der Halteeinrichtung gehalterten Pipettenspitzen und auf die jeweiligen Pipettenspitzenauslassöffnungen auf. Diese Mittel sind auch zum Ausrichten der optischen Achse der zweiten Bilderfassungseinrichtung quer zur jeweiligen Längsachse der in der Halteeinrichtung gehalterten Pipettenspitzen und auf die der zweiten Bilderfassungseinrichtung zugewandten Teilsegmente der jeweiligen Pipettenspitzenmantelflächen der gehalterten Pipettenspitzen ausgebildet. Die Halteeinrichtung der erfindungsgemässen Vorrichtung ist zwischen der Aufnahmeposition, der ersten Bilderfassungseinrichtung, der zweiten Bilderfassungseinrichtung, dem Abfallbehälter und/oder der Abgabeposition hin und her bewegbar.

In einer ersten Ausführungsform der erfindungsgemässen Vorrichtung umfasst diese eine zur Bereitstellung eines ersten Trägers enthaltend Pipettenspitzen in einer ersten Matrixanordnung von Reihen und Spalten ausgebildete Aufnahmeposition sowie eine Halteeinrichtung zum Aufnehmen einer Reihe oder Spalte von Pipettenspitzen aus der an der Aufnahmeposition bereitgestellten ersten Matrixanordnung von Reihen und Spalten. Die Halteeinrichtung umfasst eine Mehrzahl von in einer Reihe angeordneten Aufnahmeelementen, welche zur Aufnahme jeweils einer Pipettenspitze ausgebildet sind. Die Längsachsen der durch die Aufnahmeelemente gehalterten Pipettenspitzen liegen dabei im Wesentlichen in einer gemeinsamen Ebene. Die erfindungsgemässe Vorrichtung umfasst ferner eine erste Bilderfassungseinrichtung zum Erfassen von ersten Bilddaten der jeweiligen Pipettenspitzenauslassöffnungen der durch die Halteeinrichtung aufgenommenen Pipettenspitzen sowie eine zweite Bilderfassungseinrichtung zum Erfassen von zweiten Bilddaten der in der Halteeinrichtung gehalterten Pipettenspitzen. Die erfindungsgemässe Vorrichtung umfasst weiter eine Datenverarbeitungsanlage, welche signalleitend mit der ersten Bilderfassungseinrichtung, der zweiten Bilderfassungseinrichtung und der Halteeinrichtung verbunden ist. In der Datenverarbeitungsanlage sind Zulässigkeitsgrenzen für die ersten und/oder zweiten Bilddaten vordefiniert, d.h. hinterlegt. Die erfindungsgemässe Vorrichtung umfasst weiter einen zur Aufnahme von durch die Halteeinrichtung abgeworfenen Pipettenspitzen ausgebildeten Abfallbehälter sowie eine Abgabeposition, auf der ein zweiter Träger mit einer Vielzahl von Löchern in einer zweiten Matrixanordnung von Reihen und Spalten bereitstellbar ist. Die Löcher des zweiten Trägers sind dabei zum Halten der Pipettenspitzen geeignet. Die erfindungsgemässe Vorrichtung weist Mittel zum Ausrichten der optischen Achse der ersten Bilderfassungseinrichtung parallel zur jeweiligen Längsachse der in der Halteeinrichtung gehalterten Pipettenspitzen und auf die jeweiligen Pipettenspitzenauslassöffnungen auf. Diese Mittel sind auch zum Ausrichten der optischen Achse der zweiten Bilderfassungseinrichtung im Wesentlichen senkrecht auf die durch die gehalterten Pipettenspitzen definierte Ebene und auf die der zweiten Bilderfassungseinrichtung zugewandten Teilsegmente der jeweiligen Pipettenspitzenmantelflächen der gehalterten Pipettenspitzen ausgebildet. Die Halteeinrichtung der erfindungsgemässen Vorrichtung ist zwischen der Aufnahmeposition, der ersten Bilderfassungseinrichtung, der zweiten Bilderfassungseinrichtung, dem Abfallbehälter und/oder der Abgabeposition hin und her bewegbar und zum nacheinander Auffüllen der jeweiligen Reihen oder Spalten von Löchern des zweiten Trägers mit Pipettenspitzen ausgebildet, ohne dass dabei zwischen zwei abgegebenen Pipettenspitzen ein oder mehrere leere Löcher verbleiben.

Bevorzugt ist die Aufnahmeposition und/oder die Abgabeposition der erfindungsgemässen Vorrichtung gemäss der ersten Ausführungsform jeweils zur Bereitstellung von zumindest einem Rack ausgebildet.

In einer zweiten Ausführungsform der erfindungsgemässen Vorrichtung sind die Pipettenspitzen im ersten Träger in einer kreisförmigen Anordnung angeordnet. Die Anordnung der Aufnahmeelemente der Halteeinrichtung entspricht dabei der kreisförmigen Anordnung der Pipettenspitzen im ersten Träger. Bei der kreisförmigen Anordnung handelt es sich insbesondere um die Werkzeugordnung einer der erfindungsgemässen Vorrichtung vorgelagerten Spritzgussmaschine.

In einer bevorzugten Weiterbildung der zweiten Ausführungsform der erfindungsgemässen Vorrichtung weist die Halteeinrichtung Mittel zum Drehen der Halteeinrichtung um ihre Rotationsachse auf.

In einer bevorzugten Weiterbildung der zweiten Ausführungsform der erfindungsgemässen Vorrichtung umfasst die Halteeinrichtung eine an der Halteeinrichtung befestigte Beleuchtungseinrichtung, welche die kreisförmige Anordnung von Pipettenspitzen in zwei Hälften teilt. Die Beleuchtungseinrichtung weist dabei zwei planparallele Lichtaussendeflächen zum Aussenden von Licht in entgegengesetzte Richtungen auf. Alternativ ist es denkbar, dass die Halteeinrichtung eine an der Halteeinrichtung befestigte und im Zentrum der kreisförmigen Anordnung von Pipettenspitzen angeordnete Beleuchtungseinrichtung zum Aussenden von Licht in Richtung der zweiten Bilderfassungseinrichtung umfasst. In dieser Alternative ist es insbesondere vorteilhaft, wenn die Beleuchtungseinrichtung in Form einer Glühbirne oder zylinderförmig mit einer umlaufenden Lichtaussendefläche ausgebildet ist, da eine solche Beleuchtungseinrichtung das Licht gleichmässig abstrahlt.

Bei den Mitteln zur Ausrichtung der optischen Achsen der beiden Bilderfassungseinrichtungen, d.h. der ersten Bilderfassungseinrichtung und der zweiten Bilderfassungseinrichtung sowie gegebenenfalls der dritten Bilderfassungseinrichtung oder der weiteren Bilderfassungseinrichtung zum Erfassen der zweiten Bilddaten, und der in der Halteeinrichtung gehalterten Pipettenspitzen handelt es sich beispielsweise um eine durch die Datenverarbeitungsanlage ansteuerbare Bewegungseinrichtung zum gesteuerten motorischen Bewegen der Halteeinrichtung in Richtung einer X-, Y- und Z-Raumachse. Aus den bereits beim erfindungsgemässen Verfahren genannten Gründen ist die Halteeinrichtung bevorzugt nur in Richtung einer X- und Y-Raumachse durch die Bewegungseinrichtung bewegbar.

Mit Hilfe der erfindungsgemässen Vorrichtung lassen sich aufgenommenen Pipettenspitzen jeweils einzeln um die Rotationsachse der Pipettenspitzen, d.h. um ihre Längsachse, drehen, wobei lediglich eine Kamera zur Rundlaufprüfung der Pipettenspitzen benötigt wird, wie nachfolgend noch näher erläutert wird. Dadurch werden Kosten gespart. Durch die Einzelkontrolle jeder Pipettenspitze wird zudem das Problem gelöst, dass fehlerhafte Pipettenspitzen in den Verpackungsbehälter gelangen und bereits abgepackte, komplett gefüllte Pipettenspitzenhalter entsorgt werden müssen oder dass fehlerbehaftete Pipetten aufwendig durch fehlerfreie Pipetten ersetzt werden müssen. Derartige Pipettenspitzenhalter sind auch unter dem Begriff "Rack" bekannt. Stattdessen können fehlerhafte Pipettenspitzen bereits vorher aussortiert werden, beispielsweise durch Abwurf dieser fehlerhaften Pipettenspitzen in einen für Ausschussteile vorgesehenen Behälter durch die Vorrichtung. Somit werden nur Pipettenspitzen, welche die im jeweiligen Einzelfall vordefinierten Qualitätsanforderungen erfüllen, durch die Vorrichtung in Verpackungsbehälter überführt.

In einer bevorzugten Ausführungsform ist die Datenverarbeitungsanlage der erfindungsgemässen Vorrichtung mit einer der erfindungsgemässen Vorrichtung vorgelagerten Spritzgiessanlage, welche Pipettenspitzen in mehreren Kavitäten in einem Spritzgusswerkzeug produziert, signalleitend verbunden. Die aus den Kavitäten des Spritzgusswerkzeugs entnommenen Pipettenspitzen können nachverfolgbar in die hier beschriebene erste Matrixanordnung von Pipettenspitzen überführt werden. In anderen Worten ist es möglich nachzuverfolgen, aus welcher Kavität eines Spritzgusswerkzeugs eine Pipettenspitze auf einer bestimmten Position in der ersten Matrixanordnung stammt. Durch die ständige Kontrolle der Qualität jeder einzelnen Pipettenspitze durch das erfindungsgemässe Verfahren bzw. die erfindungsgemässe Vorrichtung kann die Datenverarbeitungsanlage der erfindungsgemässen Vorrichtung automatisch herausfinden, welche Kavität Probleme bereitet, und die betroffene Kavität oder die betroffenen Kavitäten danach abwählen. Wie vorhergehend beschrieben, werden die aus einer abgewählten Kavität stammenden Pipettenspitzen - unabhängig von den in Schritt c) oder Schritt d) des erfindungsgemässen Verfahrens erfassten Bilddaten - als Ausschuss behandelt und in keinem Fall in Schritt g) des erfindungsgemässen Verfahrens an den zweiten Träger abgegeben.

In einer bevorzugten Ausführungsform umfasst die erfindungsgemässe Vorrichtung ferner eine Messeinrichtung zum Feststellen des Eintritts der jeweiligen Pipettenspitzen, insbesondere der jeweiligen Pipettenspitzenauslassöffnungen, in die optische Achse der ersten Bilderfassungseinrichtung. Die Messeinrichtung ist signalleitend mit der ersten Bilderfassungseinrichtung verbunden und zum Auslösen der Erfassung der ersten Bilddaten durch die erste Bilderfassungseinrichtung ausgebildet. Bevorzugt handelt es sich bei der Messeinrichtung zum Feststellen des Eintritts der jeweiligen Pipettenspitzen in die optische Achse der ersten Bilderfassungseinrichtung um eine Lichtschranke.

Eine solche Messeinrichtung zum Auslösen der Bilderfassung weist den Vorteil auf, dass dadurch das Erfassen der ersten Bilddaten beschleunigt werden kann.

In einer bevorzugten Ausführungsform der erfindungsgemässen Vorrichtung weist die Halteeinrichtung Mittel zum Drehen der in der Halteeinrichtung gehalterten Pipettenspitzen um ihre Längsachse auf. Die Mittel zum Drehen der Pipettenspitzen sind dabei zum Drehen der Pipettenspitzen aus einer ersten Position in eine zweite Position um einen Drehwinkel α von wenigstens im Wesentlichen 90° ausgebildet. Bevorzugt beträgt der Drehwinkel α zwischen der ersten Position und der zweiten Position der Pipettenspitzen zwischen im Wesentlichen 90° und im Wesentlichen 180°. Besonders bevorzugt beträgt er Drehwinkel α zwischen der ersten Position und der zweiten Position der Pipettenspitzen im Wesentlichen 180°.

Bevorzugt umfassen die Mittel zum Drehen der in der Halteeinrichtung gehalterten Pipettenspitzen an jedem Aufnahmeelement ein Zahnrad. Die Zahnräder benachbarter Aufnahmeelemente greifen dabei ineinander und bilden einen Zahnradverbund, und sind durch einen Drehantrieb drehbar. Der Drehantrieb ist bevorzugt an einem Ende des Zahnradverbunds angeordneten. Dadurch kann die Halteeinrichtung besonders kompakt und platzsparend ausgestaltet werden.

Alternativ umfassen die Mittel zum Drehen der in der Halteeinrichtung gehalterten Pipettenspitzen an jedem Aufnahmeelement ein Zahnrad, wobei jeweils zwei benachbarte Zahnräder über ein Zwischenzahnrad unter Ausbildung eines Zahnradverbunds miteinander in Wirkverbindung stehen. In diesem Fall ist wenigstens eines der Zahnräder oder eines der Zwischenzahnräder des Zahnradverbunds durch einen Drehantrieb drehbar. Dadurch ist der gesamte Zahnradverbund drehbar.

Alternativ können die jeweils an einem Aufnahmeelement angeordneten Zahnräder benachbarter Aufnahmeelemente nicht ineinandergreifen. In diesem Fall sind die Zahnräder durch einen gemeinsamen Zahnstangentrieb oder über einen gemeinsamen Zahnriemen drehbar. Dadurch sind alle Zahnräder und damit alle Aufnahmeelemente durch den Zahnstangentrieb bzw. den Zahnriemen in dieselbe Richtung drehbar.

Bei der Verwendung eines Zahnriemens ist es vorteilhaft, Abstützmittel zum Sicherstellen der Wirkverbindung zwischen den Zahnrädern und dem Zahnriemen vorzusehen. Die Abstützmittel verhindern das Abheben des Zahnriemens von den Zahnrädern und stellen somit einen ununterbrochenen und sicheren Antrieb der jeweiligen Zahnräder sicher. Besonders bevorzugt ist es, die Abstützmittel im Bereich jeder Kontaktstelle der Zahnräder mit dem Zahnriemen anzuordnen.

Alternativ umfassen die Mittel zum Drehen der in der Halteeinrichtung gehalterten Pipettenspitzen einen Einzelantrieb, beispielsweise einen Elektromotor, an jedem Aufnahmeelement. Dadurch ist jedes Aufnahmeelement ist durch seinen Einzelantrieb unabhängig von den restlichen Aufnahmeelementen der Halteeinrichtung drehbar.

Alternativ umfassen die Mittel zum Drehen der in der Halteeinrichtung gehalterten Pipettenspitzen an jedem Aufnahmeelement eine Scheibe, welche Scheibe in Umfangsrichtung des jeweiligen Aufnahmeelementes drehfest an diesem angeordnet ist. An den Scheiben ist jeweils exzentrisch, bezogen auf die Längsachse des jeweiligen Aufnahmeelements, ein Stangenantrieb angesetzt. Durch den Stangenantrieb wird eine Hin- und Herbewegung einer Antriebsstange in eine Drehbewegung der Aufnahmeelemente umgeformt.

In einer bevorzugten Ausführungsform der erfindungsgemässen Vorrichtung sind die Mittel zum Drehen der in der Halteeinrichtung gehalterten Pipettenspitzen zum Drehen der Pipettenspitzen in Zwischenpositionen zwischen der ersten Position und der zweiten Position ausgebildet. Insbesondere sind die Mittel zum Drehen der in der Halteeinrichtung gehalterten Pipettenspitzen zum Drehen der Pipettenspitzen in eine bis vier Zwischenpositionen zwischen der ersten Position und der zweiten Position ausgebildet.

Bevorzugt sind die Zwischenpositionen gleichmässig zwischen der ersten Position und der zweiten Position verteilt, was eine besonders sichere Überprüfung des Rundlaufs der jeweiligen Pipettenspitzen erlaubt.

In einer bevorzugten Weiterbildung der ersten Ausführungsform der erfindungsgemässen Vorrichtung stimmt die Anzahl der Aufnahmeelemente der Halteeinrichtung mit der Anzahl der in einer Reihe oder Spalte der ersten Matrixanordnung bereitgestellten Pipettenspitzen überein.

Durch die Abstimmung der Anzahl an Aufnahmeelementen und der Anzahl von Elementen, d.h. Pipettenspitzen, einer Reihe und/oder Spalte der ersten Matrixanordnung ist die erfindungsgemässe Vorrichtung besonders geeignet zur effizienten Durchführung des erfindungsgemässen Verfahrens ausgestaltet, da die Halteeinrichtung in Schritt b) des erfindungsgemässen Verfahrens jeweils eine ganze Reihe oder Spalte aus der ersten Matrixanordnung aufnehmen und den Bilderfassungseinrichtungen zuführen kann.

Bevorzugt umfasst die Halteeinrichtung dabei wenigstens fünf, bevorzugt wenigstens zehn und noch besser wenigstens fünfzehn Aufnahmeelemente, da sich mit einer steigenden Anzahl an gleichzeitig geprüften Pipettenspitzen die Vorteile des erfindungsgemässen Verfahrens, insbesondere hinsichtlich seiner Effizienz und Schnelligkeit, weiter erhöhen.

In einer bevorzugten Ausführungsform der erfindungsgemässen Vorrichtung weisen die Aufnahmeelemente jeweils einen Koppelansatz mit Vakuumanschluss auf, um die Pipettenspitzen durch Beaufschlagung des von mit Unterdruck an den Aufnahmeelementen der Halteeinrichtung zu haltern. Die Koppelansätze sind dabei jeweils derart ausgebildet, dass Sie in das zur Pipettenspitzenauslassöffnung gegenüberliegende Aufsteckende einer Pipettenspitze einführbar sind und sich nach der Beaufschlagung der Pipettenspitze mit Unterdruck ein im Wesentlichen formschlüssiger Sitz und damit eine gewisse Dichtigkeit zwischen dem Koppelanschluss und der Pipettenspitze einstellt.

Eine derartige Ausgestaltung der Aufnahmeelemente weist den Vorteil auf, dass die Pipettenspitzen zuverlässig gehaltert und durch Aufheben des Unterdrucks in den gehalterten Pipettenspitzen auch einfach wieder abgeworfen werden können. Auf eine gesonderte Abwurfeinrichtung zum Abwerfen der Pipettenspitzen von den Aufnahmeelementen kann bevorzugt verzichtet werden.

Bevorzugt sind die Aufnahmeelemente konisch geformt, wodurch das Einführen der Aufnahmeelemente in das Aufsteckende der Pipettenspitzen erleichtert wird, die Dichtigkeit zwischen Aufnahmeelement und Pipettenspitze erhöht wird, und zudem ein gewisser reibschlüssiger Presssitz zwischen dem Koppelansatz und dem nahe dem Aufsteckende angeordneten Koppelbereich der Pipettenspitze erreicht wird, was eine besonders sichere Halterung der Pipettenspitzen an den jeweiligen Aufnahmeelementen bewirkt.

In einer bevorzugten Ausführungsform umfasst die erfindungsgemässe Vorrichtung eine Beleuchtungseinrichtung, welche fest relativ zur zweiten Bilderfassungseinrichtung angeordnet ist. Die Beleuchtungseinrichtung ist zur Aussendung von Licht in die zur optischen Achse der zweiten Bilderfassungseinrichtung entgegengesetzte Richtung auf die zweite Bilderfassungseinrichtung ausgebildet. Hierdurch lässt sich der Kontrast zwischen den Pipettenspitzen und dem durch die Beleuchtungseinrichtung gebildeten Hintergrund vergrössern und die Erfassung der zweiten Bilddaten durch die zweite Bilderfassungseinrichtung verbessern, wie vorgehend beschrieben.

In einer bevorzugten Ausführungsform umfasst die Datenverarbeitungsanlage der erfindungsgemässen Vorrichtung eine Benutzerschnittstelle, welche zum Auswählen von wenigstens einem Aufnahmeelement der Halteeinrichtung durch einen Benutzer ausgebildet ist. In Folge der Auswahl sind die an den ausgewählten Aufnahmeelementen gehalterten Pipettenspitzen unabhängig von den erfassten ersten und zweiten Bilddaten als Ausschuss verwerfbar. Wie vorgehend bereits beschrieben lasst sich hierdurch ausschliessen, dass Pipettenspitzen, welche bereits im Vorfeld des erfindungsgemässen Verfahrens als fehlerhaft identifiziert wurden, in den zweiten Träger abgegeben werden.

In einer bevorzugten Weiterbildung der ersten Ausführungsform der erfindungsgemässen Vorrichtung sind die Aufnahmeelemente der Halteeinrichtung in Bezug zueinander beweglich ausgebildet. Dadurch lässt sich ihre Position zueinander an die erste Matrixanordnung und/oder die zweite Matrixanordnung von Pipettenspitzen anpassen, wodurch die erfindungsgemässe Vorrichtung variabel ist und flexibel an unterschiedliche Bedürfnisse, d.h. unterschiedliche erste und/oder zweite Matrixanordnungen, anpassbar ist.

Die Aufgabe wird weiter gelöst durch eine Spritzgiessanlage zur Herstellung und Verpackung von Pipettenspitzen, wobei die erfindungsgemässe Spritzgiessanlage wenigstens eine erfindungsgemässe Vorrichtung zum Überprüfen von Pipettenspitzen umfasst.

Weitere Vorteile, Merkmale und Einzelheiten der Erfindung werden nachfolgend anhand von Zeichnungen näher erläutert, in denen gleiche oder analoge Elemente grundsätzlich mit denselben Bezugszeichen versehen sind. Es zeigen:
- Fig. 1:: Flussdiagramm einer Variante des Verfahrens zur Überprüfung von Pipettenspitzen;
- Fig. 2a:: Schematische Darstellung einer ersten Matrixanordnung von Pipettenspitzen in Schritt a) des in Fig. 1 dargestellten Verfahrens;
- Fig. 2b:: Schematische Darstellung der Matrixanordnung von Pipettenspitzen aus Fig. 2a nach Schritt b) des in Fig. 1 dargestellten Verfahrens;
- Fig. 2c:: Schematische Darstellung eines Trägers mit in einer zweiten Matrixanordnung angeordneten Löchern zur Aufnahme von Pipettenspitzen nach Schritt g) des in Fig. 1 dargestellten Verfahrens;
- Fig. 2d:: Schematische Darstellung der ersten Matrixanordnung von Pipettenspitzen aus Fig. 2b nach der erneuten Durchführung von Schritt b) des in Fig. 1 dargestellten Verfahrens;
- Fig. 2e:: Schematische Darstellung des Trägers aus Fig. 2c nach der erneuten Durchführung von Schritt g) des in Fig. 1 dargestellten Verfahrens;
- Fig. 3a:: Eine Halteeinrichtung mit einer Mehrzahl von Aufnahmeelementen zur Aufnahme von Pipettenspitzen in einem Längsschnitt;
- Fig. 3b:: Eine Stirnseitenansicht der Halteeinrichtung aus Fig. 3a;
- Fig. 3c:: Einen Ausschnitt der in Fig. 3a gezeigten Halteeinrichtung ohne Pipettenspitzen;
- Fig. 4:: Schematische Darstellung verschiedener Ausführungsformen der Mittel zum Drehen der in der Halteeinrichtung gehalterten Pipettenspitzen;
- Fig. 5:: Perspektivische Ansicht einer Anordnung umfassend eine Halteeinrichtung und eine erste Bilderfassungseinrichtung;
- Fig. 6:: Perspektivische Ansicht einer Anordnung umfassend eine Halteeinrichtung und eine zweite Bilderfassungseinrichtung;
- Fig. 7:: Perspektivische Ansicht einer Variante der Vorrichtung zur Überprüfung von Pipettenspitzen;
- Fig. 8:: Schematische Darstellung eines Trägers zur Bereitstellung von Pipettenspitzen in einer Mehrzahl von kreisförmigen Anordnungen von Pipettenspitzen;
- Fig. 9a:: Eine Halteeinrichtung mit einer Mehrzahl von kreisförmig angeordneten Aufnahmeelementen zur Aufnahme von Pipettenspitzen in einer Seitenansicht;
- Fig. 9b:: Längsschnitt durch die Halteeinrichtung aus Fig. 9a entlang der Linie B-B in Fig. 9a;
- Fig. 9c:: Untenansicht der Halteeinrichtung aus Fig. 9a;
- Fig. 10a:: Eine weitere Ausführungsform einer Halteeinrichtung mit einer Mehrzahl von kreisförmig angeordneten Aufnahmeelementen zur Aufnahme von Pipettenspitzen in einer Seitenansicht;
- Fig. 10b:: Längsschnitt durch die Halteeinrichtung aus Fig. 10a entlang der Linie C-C in Fig. 10a;
- Fig. 11a:: Perspektivische Ansicht einer Anordnung umfassend eine Halteeinrichtung und eine zweite Bilderfassungseinrichtung;
- Fig. 11b:: Die Halteeinrichtung aus Fig. 11a aus Sicht der zweiten Bilderfassungseinrichtung in Fig. 11a;
- Fig. 12a:: Perspektivische Ansicht einer Anordnung umfassend eine Halteeinrichtung, eine zweite Bilderfassungseinrichtung und eine dritte Bilderfassungseinrichtung;
- Fig. 12b:: Schematische Darstellung des Strahlengangs der beiden optischen Achsen aus Figur 12a durch die kreisförmige Anordnung der in der Halteeinrichtung gehalterten Pipettenspitzen;
- Fig. 13a:: Seitenansicht einer Anordnung umfassend eine Halteeinrichtung mit daran angebrachter Beleuchtungseinrichtung und eine zweite Bilderfassungseinrichtung;
- Fig. 13b:: Perspektivische Ansicht der Anordnung aus Fig. 13a.

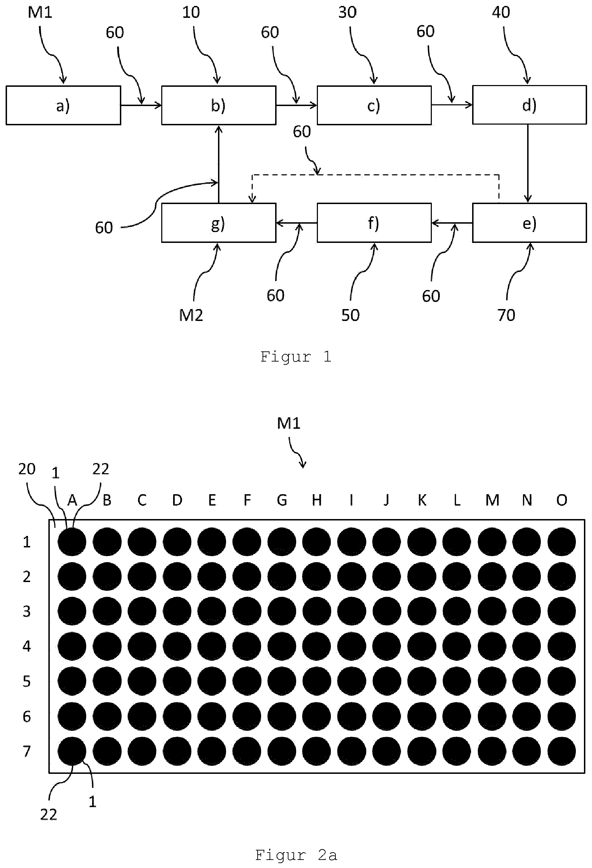

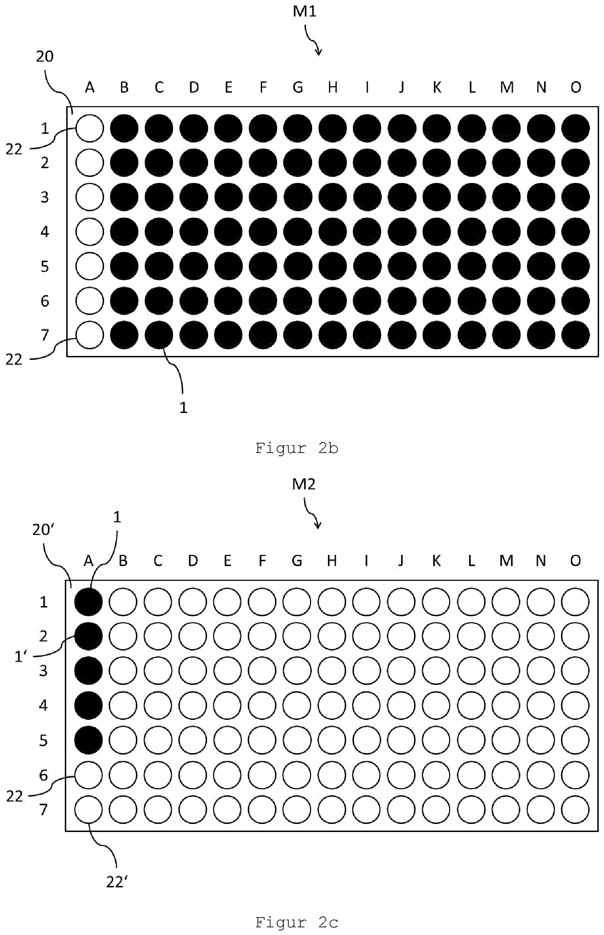

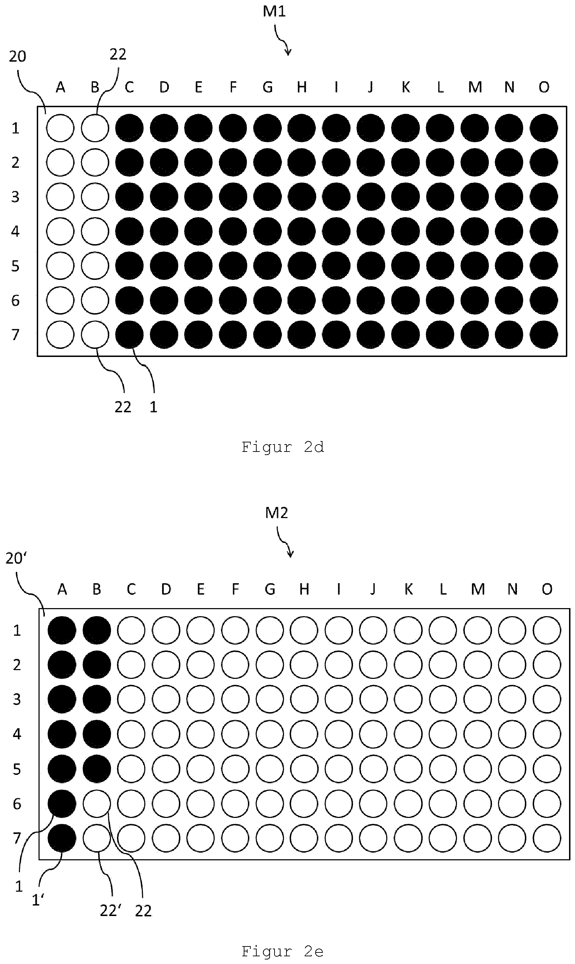

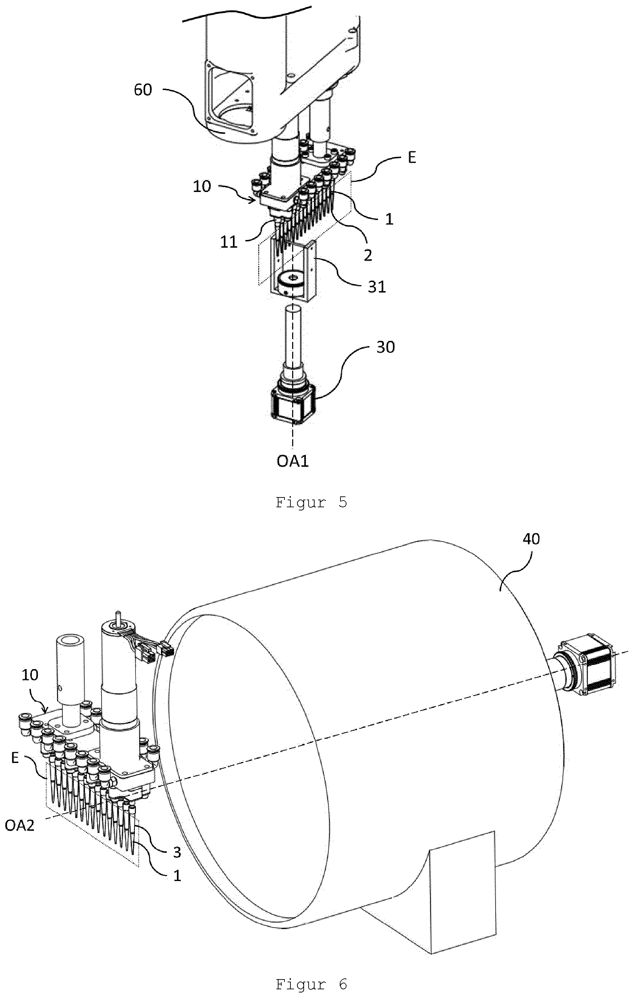

Figur 1 zeigt ein schematisches Flussdiagramm einer Variante des erfindungsgemässen Verfahrens zur Überprüfung von Pipettenspitzen gemäss der ersten Ausführungsform. Das Verfahren umfasst das Bereitstellen von Pipettenspitzen in einer ersten Matrixanordnung M1 von Reihen und Spalten in Verfahrensschritt a). Die bereitgestellten Pipettenspitzen werden in Schritt b) durch eine Halteeinrichtung 10 aus der ersten Matrixanordnung M1 von Pipettenspitzen aufgenommen, wie noch detailliert zu den Figuren 2a, 2b, 2d beschrieben wird. Die in Schritt b) aufgenommenen Pipettenspitzen werden in Schritt c) zum Erfassen von ersten Bilddaten der Pipettenspitzen einer ersten Bilderfassungseinrichtung 30 zugeführt, wie noch detailliert zu Figur 5 ausgeführt wird. Anschliessend werden die an der Halteeinrichtung gehalterten Pipettenspitzen in Schritt d) zum Erfassen von zweiten Bilddaten der Pipettenspitzen einer zweiten Bilderfassungseinrichtung 40 zugeführt, wie noch detailliert zu Figur 6 ausgeführt wird. Nach dem Erfassen der ersten und zweiten Bilddaten der Pipettenspitzen in den Schritten c) und d) wird durch eine Datenverarbeitungsanlage 70 der Vorrichtung, mit der das erfindungsgemässe Verfahren durchgeführt wird, ermittelt, ob die ersten und/oder zweiten Bilddaten innerhalb vordefinierten Zulässigkeitsgrenzen liegen oder nicht. Diese Zulässigkeitsgrenzen sind in Datenverarbeitungsanlage 70 hinterlegt. Im in Figur 1 dargestellten Ausführungsbeispiel ergab die Auswertung der ersten und/oder zweiten Bilddaten in Schritt e), dass einige der in Schritt c) und Schritt d) geprüften Pipettenspitzen ausserhalb der vordefinierten Zulässigkeitsgrenzen liegen. Daraufhin wird die Halteeinrichtung 10 in Schritt f) über eine Öffnung eines Abfallbehälters 50 bewegt und die fehlerhaften Pipettenspitzen in den Abfallbehälter 50 abgeworfen. Abschliessend werden diejenigen Pipettenspitzen, deren in Schritt e) ermittelte erste und zweite Bilddaten innerhalb der vordefinierten Zulässigkeitsgrenzen liegen, in einen zweiten Träger mit einer Vielzahl von Löchern, welche zum Halten der abgegebenen Pipettenspitzen geeignet und in dem zweiten Träger in einer zweiten Matrixanordnung M2 von Reihen und Spalten angeordnet sind, abgegeben, wie noch detailliert zu den Figuren 2c und 2e beschrieben wird. Alternativ ist es möglich, dass sämtliche der in Schritt b) aufgenommenen Pipettenspitzen innerhalb der vordefinierten Zulässigkeitsgrenzen liegen, wie durch die gestrichelte Linie in Figur 1 dargestellt. Die Halteeinrichtung 10 ist an einer Bewegungseinrichtung 60 zur motorischen Bewegung der Halteeinrichtung 10 befestigt, welche Bewegungseinrichtung 60 die Halteeinrichtung 10 von und zu den einzelnen Stationen der Verfahrensschritte a) bis g) bewegt.

Figur 2a zeigt eine schematische Draufsicht auf einen ersten Träger 20 mit einer Vielzahl von Löchern 22 zum Halten von Pipettenspitzen 1, welche Löcher 22 in einer ersten Matrixanordnung M1 in dem ersten Träger 20 angeordnet sind. In dem gezeigten Ausführungsbeispiel haltert jedes der Löcher 22 im ersten Träger 20 eine Pipettenspitze 1, sodass der erste Träger 20 insgesamt einhundertfünf Pipettenspitzen 1 bereitstellt. Die erste Matrixanordnung M1 besteht folglich aus fünfzehn Spalten A-O und sieben Reihen von Löchern 22. Beispielsweise handelt es sich bei dem in Figur 2a gezeigten, ersten Träger 20 um die Lochplatte eines Racks für Pipettenspitzen. Die in Figur 2a dargestellte Situation stellt nur eine mögliche Ausgangssituation von Schritt a) des in Figur 1 dargestellten Verfahrens zur Überprüfung von Pipettenspitzen dar, d.h. eine Ausgangssituation, in der ein vollständig mit Pipettenspitzen 1 gefüllter erster Träger 20 in Schritt a) des erfindungsgemässen Verfahrens bereitgestellt wird. Es ist erfindungsgemäss jedoch auch denkbar, dass der in Schritt a) des erfindungsgemässen Verfahrens bereitgestellte erste Träger 20 nicht oder nicht mehr vollständig mit Pipettenspitzen 1 gefüllt ist, wie nachfolgend zu Figur 2c beschrieben, und/oder die erste Matrixanordnung ein oder mehrere freie Plätze zwischen zwei benachbarten Pipettenspitzen 1, 1' aufweist.

Figur 2b zeigt eine schematische Draufsicht auf den in Figur 2a gezeigten ersten Träger 20, nachdem in Schritt b) des in Figur 1 dargestellten Verfahrens eine komplette Spalte von Pipettenspitzen 1 durch eine Halteeinrichtung (nicht gezeigt) aus der ersten Matrixanordnung M1 aufgenommen wurde, wobei die komplette Spalte im dargestellten Ausführungsbeispiel die Positionen A1 bis A7 des ersten Trägers 20 umfasst.

Figur 2c zeigt eine schematische Draufsicht auf einen zweiten Träger 20' mit einer Vielzahl von Löchern 22 zum Halten von Pipettenspitzen 1, welche Löcher 22 in einer zweiten Matrixanordnung M2 in dem zweiten Träger 20' angeordnet sind. Der in Figur 2c dargestellte zweite Träger 20' entspricht hinsichtlich der Anzahl und Anordnung der Löcher 22 dem Träger aus Figur 2a, d.h. dass die erste Matrixanordnung M1 und die zweite Matrixanordnung M2 in dieser Variante des erfindungsgemässen Verfahrens zum Überprüfen von Pipettenspitzen 1 identisch sind. Es ist erfindungsgemäss jedoch auch denkbar, dass sich die erste Matrixanordnung M1 und die zweite Matrixanordnung M2 voneinander unterscheiden, insbesondere hinsichtlich der Anzahl von Reihen und Spalten und/oder hinsichtlich des Abstands der Löcher 22 in den Trägern 20, 20' relativ zueinander, welche Löcher 22 die jeweilige Matrixanordnung definieren. In dem in Figur 2c dargestellten Träger wurden die Löcher 22 auf den Positionen A1 bis A5 des zweiten Trägers 20' in Schritt g) des in Figur 1 dargestellten Verfahrens mit jeweils einer Pipettenspitze 1 besetzt, wohingegen die beiden verbleibenden Löcher 22 der Spalte A, d.h. die Positionen A6 und A7, in Schritt g) unbesetzt blieben. Die in Figur 2c dargestellte Situation ergibt sich, ausgehend von der in Figur 2b dargestellten Situation, dadurch, dass Schritt e) des in Figur 1 dargestellten Verfahrens ergab, dass die in den Schritten c) und d) erfassten ersten und/oder zweiten Bilddaten von zwei der sieben in Schritt b) aufgenommenen Pipettenspitzen nicht innerhalb von vordefinierten Zulässigkeitsgrenzen liegen (nicht gezeigt). In der Folge wurden diese beiden, in Schritt e) ermittelten Pipettenspitzen 1 in Schritt f) des in Figur 1 dargestellten Verfahrens durch die Halteeinrichtung in einen Abfallbehälter abgeworfen (nicht gezeigt). Erfindungsgemäss wurden die fünf verbleibenden Pipettenspitzen 1, deren in Schritt e) ermittelte erste und zweite Bilddaten innerhalb der vordefinierten Zulässigkeitsgrenzen liegen, derart durch die Halteeinrichtung in den zweiten Träger 20' abgegeben, dass die Löcher 22 mit den Positionen A1 bis A5 der Spalte A des zweiten Trägers 20' nacheinander aufgefüllt wurden, ohne dass dabei zwischen zwei abgegebenen Pipettenspitzen 1 ein oder mehrere leere Löcher 22 verblieben.

Figur 2d zeigt eine schematische Draufsicht auf den in Figur 2b gezeigten ersten Träger 20, nachdem in einem weiteren Schritt b) des in Figur 1 dargestellten Verfahrens eine weitere komplette Spalte von Pipettenspitzen 1 durch eine Halteeinrichtung (nicht gezeigt) aus der ersten Matrixanordnung M1 aufgenommen wurde, wobei die komplette Spalte im in Figur 2d dargestellten Ausführungsbeispiel die Positionen B1 bis B7 des ersten Trägers 20 umfasst.

Figur 2e zeigt eine schematische Draufsicht auf den zweiten Träger 20' aus Figur 2c, nachdem in einem weiteren Schritt g) des in Figur 1 dargestellten Verfahrens die sieben Pipettenspitzen 1, welche - wie in Figur 2d dargestellt - durch eine Halteeinrichtung aus Spalte B des ersten Trägers 20 aufgenommen wurden, derart in den zweiten Träger 20' abgegeben wurden, dass die zwei leeren Löcher 22, 22' mit den Positionen A6 und A7 der Spalte A des zweiten Trägers 20' zuerst nacheinander mit jeweils einer Pipettenspitze 1 aufgefüllt wurden und anschliessend die verbleibenden fünf Pipettenspitzen 1 in die Löcher 22 mit den Positionen B1 bis B6 der Spalte B des zweiten Trägers 20' abgegeben wurden, ohne dass dabei zwischen zwei abgegebenen Pipettenspitzen 1 ein oder mehrere leere Löcher 22 verblieben. Die Schritte b) bis g) des in Figur 1 dargestellten Verfahrens können beliebig oft wiederholt werden, insbesondere solange, bis sämtliche Löcher 22 des zweiten Trägers 20' mit überprüften Pipettenspitzen 1 befüllt wurden, in welchem Fall etwaige in der Halteeinrichtung übriggebliebene Pipettenspitzen in einen weiteren Träger 20" mit einer Vielzahl von Löchern 22 in einer zweiten Matrixanordnung M2 von Reihen und Spalten abgegeben werden, welche Löcher 22 zum Halten der abgegebenen Pipettenspitzen 1 geeignet sind.

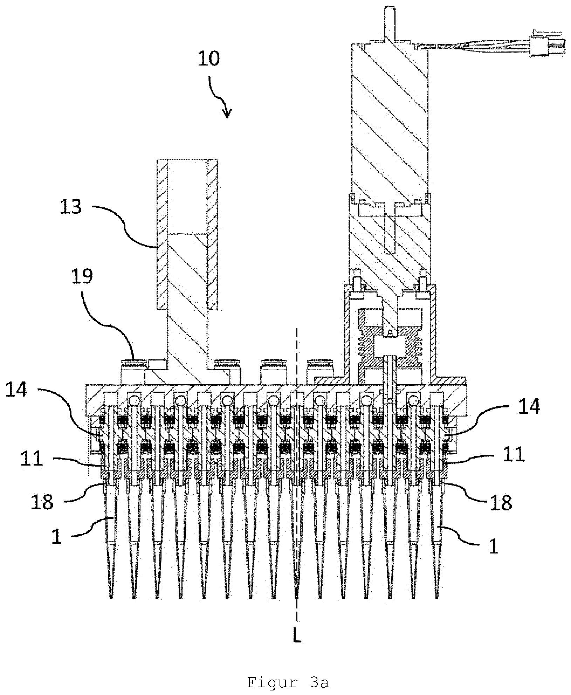

Figur 3a zeigt einen Längsschnitt durch eine Halteeinrichtung 10 zur Verwendung in einem Verfahren bzw. einer Vorrichtung gemäss der ersten Ausführungsform. Die Halteeinrichtung 10 weist fünfzehn Aufnahmeelemente 11 auf, an denen jeweils eine Pipettenspitze 1 aufgenommen sind. Die in dieser Ausführungsform der Halteeinrichtung 10 gezeigten Aufnahmeelemente 11 weisen jeweils einen konisch geformten Koppelansatz 18 auf, welcher fluidleitend mit einem Vakuumanschluss 19 verbunden ist. Die Pipettenspitzen 1 werden durch Beaufschlagung der jeweiligen Pipettenspitzenkavität mit Unterdruck an den Aufnahmeelementen 11 der Halteeinrichtung 10 gehalten. Die Halteeinrichtung 10 umfasst ferner Mittel 13 zum Drehen der in der Halteeinrichtung 10 an den Aufnahmelementen 11 gehalterten Pipettenspitzen 1 um ihre Längsachse L. Die Mittel 13 zum Drehen der gehalterten Pipettenspitzen 1 um ihre Längsachse L sind jeweils einem Aufnahmeelement 11 zugeordnet und umfassen im dargestellten Ausführungsbeispiel ein Zahnrad 14 an jedem Aufnahmeelement 11. Die Zahnräder 14 greifen in der dargestellten Ausführungsform ineinander und sind durch einen gemeinsamen Drehantrieb drehbar.

Durch die dargestellten Mittel 13 können die Pipettenspitzen 1 jeweils aus einer ersten Position in eine zweite Position um einen Drehwinkel von zumindest 90° gedreht werden. An der Halteeinrichtung 10 sind ferner Mittel 12 zum Ausrichten der in der Halteeinrichtung 10 gehalterten Pipettenspitzen 1 befestigt, welche Teil einer - in der gezeigten Darstellung nicht sichtbaren - Bewegungseinrichtung 60 zum motorischen Bewegen der Halteeinrichtung 10 in Richtung einer X-, Y- und Z-Raumachse ist. Eine solche Bewegungseinrichtung ist beispielsweise ein Industrieroboter, welcher an sich dem Fachmann bekannt ist.

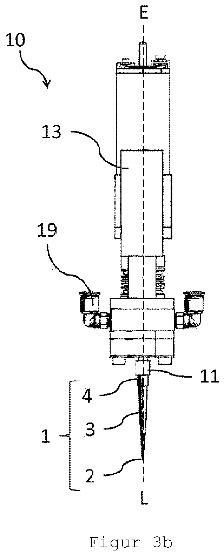

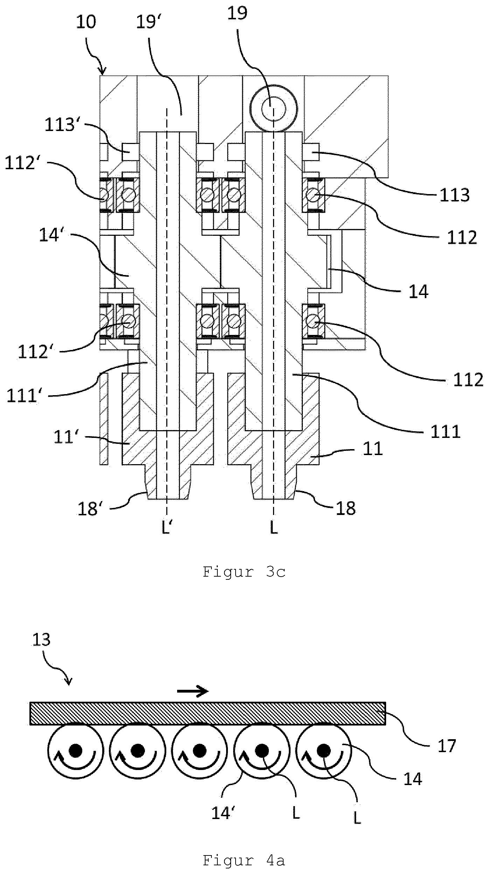

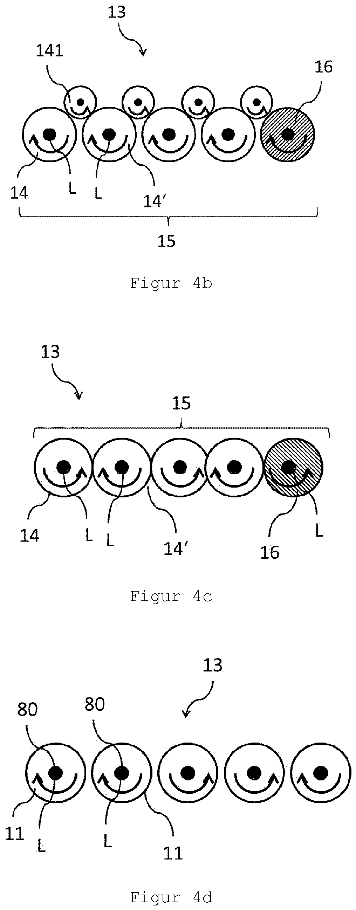

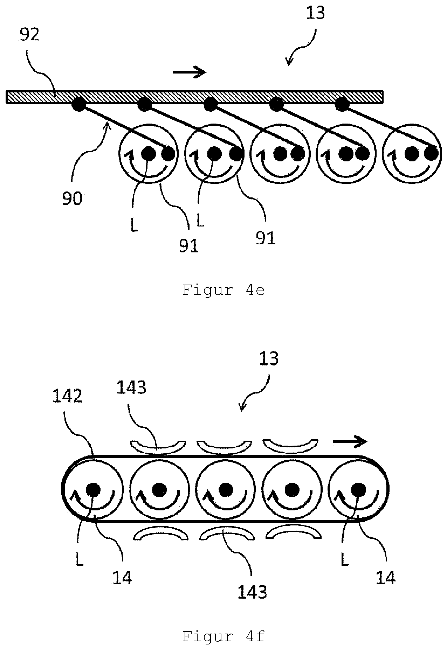

Figur 3b zeigt eine Stirnseitenansicht der Halteeinrichtung 10 aus Figur 3a. Aus dieser Ansicht ist insbesondere ersichtlich, dass sämtliche Aufnahmeelemente 11 in einer Reihe angeordnet sind. Jede Pipettenspitze 1 ist dabei an ihrem Aufsteckende 4 an einem Aufnahmeelement 11 gehalten, welches Aufsteckende 4 sich in Längsrichtung L an dem zur ihrer Pipettenspitzenauslassöffnung 2 gegenüberliegenden Ende befindet. Die Pipettenspitzenmantelfläche 3 stellt den Bereich zwischen dem Aufsteckende 4 und der Auslassöffnung 2 einer Pipettenspitze 1 dar. Die Längsachsen L der durch die Aufnahmeelemente 11 gehalterten Pipettenspitzen 1 liegen dabei im Wesentlichen in einer gemeinsamen Ebene E. Die in Reihe angeordneten Pipettenspitzen 1 werden mit mindestens einem Antrieb 13 um einen Drehwinkel gedreht. Die einzelnen Pipettenspitzen 1 sind dabei mit einer Mechanik miteinander verbunden, wie nachfolgend in Figur 4 anhand von mehreren denkbaren Beispielen noch näher beschrieben wird.

Figur 3c zeigt die in Figur 3a gezeigte Halteeinrichtung 10 in einer Detailansicht und ohne Pipettenspitzen. Aus der in Figur 3c gezeigten Ansicht ist insbesondere ersichtlich, dass die Längsachsen L, L' zweier benachbarter Aufnahmeelemente 11, 11' parallel verlaufen und dass die Aufnahmeelemente 11, 11' jeweils drehfest mit einer Kurbel 111, 111' verbunden sind. An den Kurbeln 111, 111' ist wiederum jeweils ein Zahnrad 14, 14' angeordnet, welche Zahnräder 14, 14' ineinandergreifen und somit miteinander in Wirkverbindung stehen. Die Kurbeln 111, 111' sind jeweils durch mehrere Lager 112, 112' gelagert und mittels einer Dichtung 113, 113' abgedichtet. Die Aufnahmeelemente 11, 11' weisen jeweils einen konisch geformten Koppelansatz 18, 18' auf, welcher fluidleitend mit einem Vakuumanschluss 19, 19' verbunden ist.

In Figur 4 sind weitere denkbare Ausführungsformen der Mittel 13 zum Drehen der an den Aufnahmeelementen einer Halteeinrichtung gehalterten Pipettenspitzen (nicht gezeigt) um ihre Längsachse L schematisch dargestellt, und zwar jeweils aus einer Ansicht in Richtung der Längsachse L der Pipettenspitzen 1. Dabei zeigt Figur 4a fünf Zahnräder 14, 14', welche nicht ineinandergreifen und durch einen gemeinsamen Zahnstangentrieb 17 bewegbar sind, d.h. um ihre jeweilige Längsachse L drehbar sind. Dabei ist an jedem Aufnahmeelement ein Zahnrad 14, 14' angeordnet (aus Gründen der Übersichtlichkeit nicht gezeigt). Durch Bewegen des Zahnstangentriebs 17 in Richtung des in Figur 4a oberhalb des Zahnstangentriebs 17 eingezeichneten Pfeils sind alle Zahnräder 14, 14' - und somit auch alle Pipettenspitzen - in dieselbe Richtung drehbar, wie durch die Pfeile in den Zahnrädern 14, 14' angegeben. Figur 4b zeigt eine Ausführungsform der Mittel 13 zum Drehen der Pipettenspitzen 1, bei der an jedem der fünf Aufnahmeelemente ein Zahnrad 14 angeordnet ist. Zwischen zwei benachbarten Zahnrädern 14, 14' ist jeweils ein Zwischenzahnrad 141 angeordnet, welches mit den beiden Zahnrädern 14, 14' in Wirkverbindung. Die dargestellten fünf Zahnräder 14 und die vier Zwischenzahnräder 141 bilden einen Zahnradverbund 15 aus. Wenigstens eines der Zahnräder 14, 14' und/oder wenigstens eines der Zwischenzahnräder 141 des Zahnradverbunds 15 ist durch einen Drehantrieb 16, beispielsweise durch einen Elektroantrieb, Pneumatikzylinder oder einen Hubmagnet, drehbar. In dieser Ausführungsform sind alle Zahnräder 14, 14' - und somit auch alle Pipettenspitzen - in dieselbe Richtung drehbar, wie durch die Pfeile in den Zahnrädern 14, 14' angegeben. In Figur 4c ist eine Ausführungsform gezeigt, in der an jedem Aufnahmeelement (nicht gezeigt) ein Zahnrad 14 angeordnet ist. Jeweils zwei benachbarte Zahnräder 14, 14' greifen zur Ausbildung eines Zahnradverbunds 15 ineinander. Der Zahnradverbund 15 wird von einem in der Darstellung am rechten äusseren Ende des Zahnradverbunds 15 angeordneten Drehantrieb 16 angetrieben. Aus dieser Ausführungsform ergibt sich für die Pipettenspitzen eine alternierende Drehrichtung, wie durch die Pfeile in Figur 4c dargestellt, was für die Auswertung jedoch nicht von Bedeutung ist. In der in Figur 4d dargestellten Variante ist jedem fünf Aufnahmeelemente 11 ein Einzelantrieb 80, beispielsweise ein Elektroantrieb, Pneumatikzylinder oder einen Hubmagnet, zugeordnet. Die Aufnahmeelemente 11 stehen dabei untereinander nicht in Wirkverbindung. Wie aus der Richtung der dargestellten Pfeile hervorgeht, ist dadurch jedes Aufnahmeelement 11 unabhängig von den restlichen Aufnahmeelementen 11 der Halteeinrichtung (nicht dargestellt) drehbar. In der in Figur 4e dargestellten Ausführungsform umfasst jedes Aufnahmeelement (nicht gezeigt) eine Scheibe 91, welche in Umfangsrichtung U der Aufnahmeelemente drehfest an den Aufnahmeelementen angeordnet ist. An den Scheiben 91 ist jeweils exzentrisch ein Stangenantrieb 90 zur Umformung einer Hin- und Herbewegung einer Antriebsstange 92 in eine Drehbewegung der Scheiben 91 und damit der Aufnahmeelemente und der Pipettenspitzen angesetzt. In der in Figur 4f dargestellten Variante der Mittel 13 ist an jedem Aufnahmeelement ein Zahnrad 14 angeordnet. Die Zahnräder 14 greifen nicht ineinander und sind durch einen gemeinsamen Zahnriemen 142 drehbar. An den Stellen, an denen der Zahnriemen 142 nicht durch die in der Darstellung zuäusserst angeordneten Zahnräder 14 umgelenkt wird, sind ferner Abstützmittel 143 zum Sicherstellen der Wirkverbindung zwischen den Zahnrädern 14 und dem Zahnriemen 142 vorhanden. Die sechs dargestellten Abstützmittel 143 verhindern, dass sich der Zahnriemen 142 von den Zahnrädern 14 löst und der Antrieb der Aufnahmeelemente unterbrochen wird.

Figur 5 zeigt eine Anordnung umfassend eine Halteeinrichtung 10 und eine erste Bilderfassungseinrichtung 30 in einer perspektivischen Ansicht. Die Pipettenspitzenauslassöffnungen 2 der in der Halteeinrichtung 10 gehalterten Pipettenspitzen 1 werden mit Hilfe von Bewegungseinrichtung 60 derart an der ersten Bilderfassungseinrichtung 30 vorbeibewegt, dass die optische Achse OA1 der ersten Bilderfassungseinrichtung 30 während der Erfassung der ersten Bilddaten parallel zur jeweiligen Längsachse L der an den Aufnahmeelementen 11 gehalterten Pipettenspitzen 1 und auf die jeweilige Pipettenspitzenauslassöffnung 2 ausgerichtet ist. Im Falle der in Figur 5 dargestellten, die erste Ausführungsform der erfindungsgemässen Vorrichtung betreffenden, Anordnung erfolgt die Bewegung der Halteeinrichtung 10 durch die Bewegungseinrichtung 60 in Richtung der durch die gehalterten Pipettenspitzen 1 aufgespannten Ebene E und im Wesentlichen senkrecht zur und durch die optische Achse OA1 der ersten Bilderfassungseinrichtung 30, wobei die jeweils durch die optische Achse OA1 der ersten Bilderfassungseinrichtung 30 hindurchgeführten Pipettenspitzen 1 jeweils im Wesentlichen in einer Bildebene, also jeweils im selben Abstand zur ersten Bilderfassungseinrichtung 30, an dieser vorbeibewegt werden. Im Falle der Verwendung einer Halteeinrichtung, an der die Aufnahmeelemente 11 kreisförmig angeordnet sind, erfolgt die Bewegung der Halteeinrichtung 10 durch die Bewegungseinrichtung 60 entsprechend so, dass die gehalterten Pipettenspitzen 1 nacheinander im Wesentlichen senkrecht zur und durch die optische Achse OA1 der ersten Bilderfassungseinrichtung 30 bewegt werden, wobei die jeweils durch die optische Achse OA1 der ersten Bilderfassungseinrichtung 30 hindurchgeführten Pipettenspitze 1 jeweils im Wesentlichen im selben Abstand zur ersten Bilderfassungseinrichtung 30 vorbeibewegt werden. In beiden Ausführungsformen kann ferner eine Messeinrichtung 31 in Form einer Lichtschranke vorgesehen sein, welche den Eintritt der jeweiligen Pipettenspitzenauslassöffnungen 2 in die optische Achse OA1 der ersten Bilderfassungseinrichtung 30 feststellt. Die Messeinrichtung 31 ist signalleitend mit der ersten Bilderfassungseinrichtung 30 verbunden (nicht gezeigt) und löst die Erfassung der ersten Bilddaten durch die erste Bilderfassungseinrichtung 30 aus, sobald die Lichtschranke durch eine Pipettenspitze 1 unterbrochen wird.

Figur 6 zeigt eine perspektivische Ansicht einer Anordnung umfassend eine Halteeinrichtung 10 und eine zweite Bilderfassungseinrichtung 40, wie sie während dem Erfassen der zweiten Bilddaten in Schritt d) des erfindungsgemässen Verfahrens gemäss der ersten Ausführungsform vorliegt. Die optische Achse OA2 der zweiten Bilderfassungseinrichtung 40 ist dabei im Wesentlichen senkrecht auf die durch die gehalterten Pipettenspitzen 1 definierte Ebene E ausgerichtet, wobei diese Ebene E im Wesentlichen in einer Bildebene der zweiten Bilderfassungseinrichtung 40 liegt. Die zweiten Bilddaten der jeweiligen Teilsegmente der Pipettenspitzenmantelflächen 3, welche der zweiten Bilderfassungseinrichtung 40 zugewandt sind, sind somit gleichzeitig erfassbar. Durch Drehen der in der Halteeinrichtung 10 gehalterten Pipettenspitzen 1 aus einer Ausgangsposition um einen Drehwinkel von 90° in eine Endposition ist jeweils ein weiteres Teilsegment der Pipettenspitzenmantelfläche 3 erfassbar, wobei aus den in der Ausgangsposition und der Endposition erhaltenen Bilddaten der Rundlauf der Pipettenspitzen überprüfbar ist (nicht gezeigt).

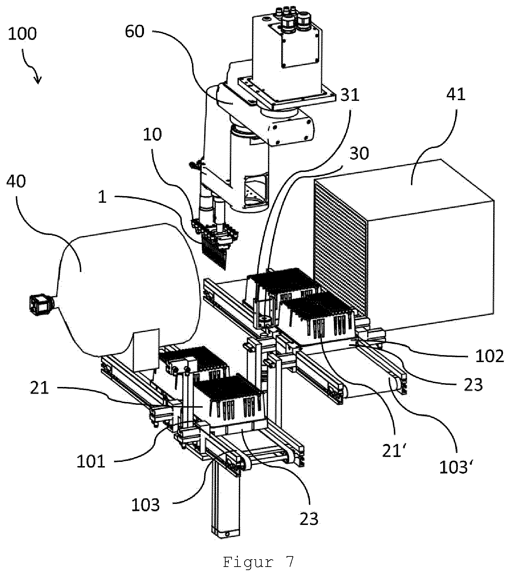

Figur 7 zeigt eine Variante einer Vorrichtung 100 zum Überprüfen von Pipettenspitzen 1 gemäss der ersten Ausführungsform, in einer perspektivischen Ansicht. Die Vorrichtung 100 umfasst eine Aufnahmeposition 101, welche zur Bereitstellung eines ersten Racks 21 enthaltend Pipettenspitzen in einer ersten Matrixanordnung M1 ausgebildet ist, wobei die Racks 21 im gezeigten Ausführungsbeispiel jeweils auf einem Werkstückträger 23 angeordneten sind. Die Werkstückträger 23 sind durch eine Transporteinrichtung, beispielsweise ein Transportband 103, auf die Aufnahmeposition 101 bewegbar. Die Vorrichtung 100 besitzt ferner eine Haltevorrichtung 10 zum Aufnehmen einer kompletten Reihe oder kompletten Spalte von Pipettenspitzen 1 aus dem an der Aufnahmeposition 101 bereitgestellten ersten Rack 20. Die Halteeinrichtung 10 umfasst eine Mehrzahl von in einer Reihe angeordneten Aufnahmeelementen 11, welche zur Aufnahme jeweils einer Pipettenspitze 1 ausgebildet sind. Bei einer ersten Matrixanordnung M1 des ersten Racks von beispielsweise acht Reihen und zwölf Spalten besitzt die Halteeinrichtung also zumindest acht in einer Reihe angeordnete Aufnahmeelemente 11, um eine komplette Spalte von acht Pipettenspitzen aus einer der zwölf Spalten des ersten Racks aufnehmen zu können. Es ist erfindungsgemäss jedoch denkbar, dass die Halteeinrichtung zwölf in einer Reihe angeordnete Aufnahmeelemente 11 aufweist, sodass entweder eine komplette Spalte von acht Pipettenspitzen aus einer der zwölf Spalten des ersten Racks aufgenommen werden können oder aber eine komplette Reihe von zwölf Pipettenspitzen aus einer der acht Reihen des ersten Racks aufgenommen werden können. Die Vorrichtung 100 umfasst ferner eine erste Bilderfassungseinrichtung 30 zum Erfassen von ersten Bilddaten der jeweiligen Pipettenspitzenauslassöffnungen 2 sowie eine zweite Bilderfassungseinrichtung 40 zum Erfassen von zweiten Bilddaten der in der Halteeinrichtung 10 gehalterten Pipettenspitzen 1. Darüber hinaus ist eine Messeinrichtung 31 zum Erfassen des Durchtritts der Pipettenspitzen durch die optische Achse der ersten Bilderfassungseinrichtung vorhanden. Vorrichtung 100 umfasst ferner eine fest relativ zur zweiten Bilderfassungseinrichtung 40 angeordnete Beleuchtungseinrichtung 41, welche zur Aussendung von Licht auf die zweite Bilderfassungseinrichtung 40 in die zur optischen Achse der zweiten Bilderfassungseinrichtung 40 entgegengesetzte Richtung ausgebildet ist. Eine Datenverarbeitungsanlage (nicht gezeigt), in der Zulässigkeitsgrenzen für die ersten und/oder zweiten Bilddaten vordefiniert sind, ist dabei signalleitend mit zumindest der ersten Bilderfassungseinrichtung 30, der zweiten Bilderfassungseinrichtung 40 und der Halteeinrichtung 10 verbunden, sodass Pipettenspitzen 1, deren erste oder zweite Bilddaten ausserhalb der in der Datenverarbeitungsanlage vordefinierten Zulässigkeitsgrenzen liegen, von ihrem jeweiligen Aufnahmeelement 11 in einen Abfallbehälter (nicht gezeigt) abgeworfen werden können. Die Vorrichtung 100 umfasst weiter eine Abgabeposition 102, auf der im gezeigten Ausführungsbeispiel ein zweites Rack 21' auf einem weiteren Werkstückträger 23 bereitgestellt ist. Das zweite Rack 21' weist eine Vielzahl von Löchern in einer zweiten Matrixanordnung M2 von Reihen und Spalten auf, wobei jedes Loch zum Halten einer Pipettenspitze 1 ausgebildet ist. Im gezeigten Ausführungsbeispiel sind das erste Rack 21 und das zweite Rack 21' identisch ausgebildet. Die Vorrichtung 100 umfasst weiter Mittel zum Ausrichten der in der Halteeinrichtung 10 gehalterten Pipettenspitzen 1 relativ zur ersten Bilderfassungseinrichtung 30 und zur zweiten Bilderfassungseinrichtung 40, welche im gezeigten Ausführungsbeispiel durch Bewegungseinrichtung 60, einen Industrieroboter, verwirklicht sind. Die Bewegungseinrichtung 60 ist zum Bewegen der Halteeinrichtung 10 zwischen der Aufnahmeposition 101, der ersten Bilderfassungseinrichtung 30, der zweiten Bilderfassungseinrichtung 40, dem in Figur 7 nicht gezeigten Abfallbehälter und der Abgabeposition 102 ausgebildet.

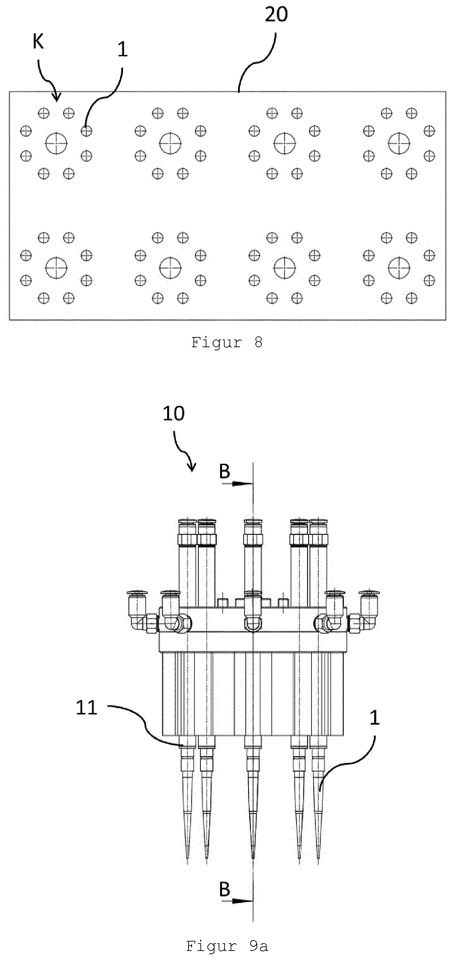

Figur 8 zeigt einen Träger 20 zur Bereitstellung von Pipettenspitzen 1 in einer Mehrzahl von kreisförmigen Anordnungen K in einer schematischen Darstellung. Die Anordnung der Pipettenspitzen 1 im Träger 20 entspricht dabei bevorzugt der Anordnung der Pipettenspitzen 1 in den Kavitäten des in Figur 8 nicht gezeigten Spritzgusswerkzeugs, dem sie entstammen, sodass die hergestellten Pipettenspitzen nach dem Öffnen des Spritzgusswerkzeugs einfach unter Beibehaltung der im Spritzgusswerkzeugs vorliegenden Anordnung, der Werkzeugordnung, in den ersten Träger 20 überführt werden können. Im Falle des in Figur 8 dargestellten Beispiels umfasst der erste Träger 20 acht kreisförmige Anordnungen K mit jeweils acht Aufnahmen für jeweils eine Pipettenspitze 1. Grundsätzlich werden bei der Herstellung von Pipettenspitzen bevorzugt Spritzgusswerkzeuge mit acht oder einem Vielfachen von acht Kavitäten eingesetzt (z.B. 16, 32, 64, 96 oder 128), wobei auch davon abweichende Kavitätenzahlen (z.B. 12, 20, etc.) realisierbar sind. Folglich kann, wie vorstehend erläutert, auch die Anzahl der Aufnahmen sowie ihre Anordnung im Träger, insbesondere je nach verwendetem Spritzgusswerkzeug, variieren.

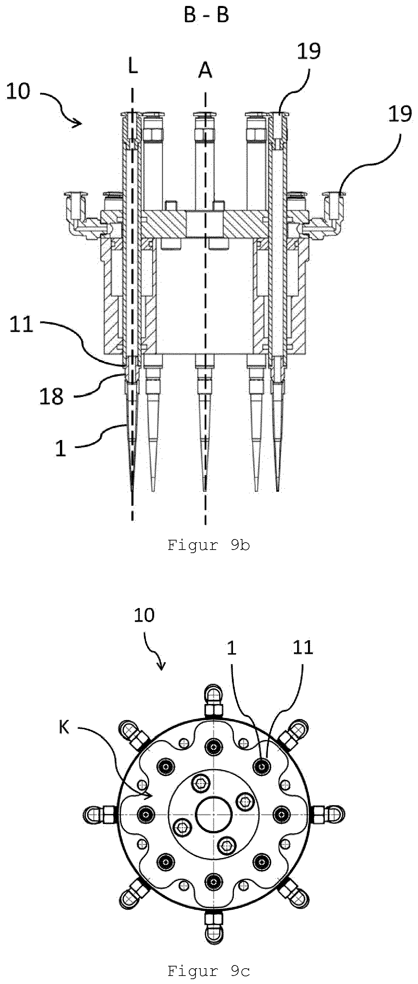

Figur 9a zeigt eine Seitenansicht einer Halteeinrichtung 10 mit einer acht kreisförmig angeordneten Aufnahmeelementen 11 zur Aufnahme jeweils einer Pipettenspitze 1 gemäss der zweiten Ausführungsform der erfindungsgemässen Vorrichtung, wie aus der in Figur 9c gezeigten Untenansicht hervorgeht. Die in Figur 9c dargestellte Anordnung von acht in Umfangsrichtung der kreisförmigen Anordnung K gleichmässig voneinander beabstandeten Pipettenspitzen 1 entspricht dabei der kreisförmigen Anordnung K, wie sie im in Figur 8 dargestellten ersten Träger 20 vorliegt. Ein Längsschnitt durch die Halteeinrichtung 10 entlang der Linie B-B ist in Figur 9b dargestellt. Wie daraus ersichtlich ist, weisen die Aufnahmeelemente 11 jeweils einen konisch geformten Koppelansatz 18 auf, welcher fluidleitend mit einem zugehörigen Vakuumanschluss 19 verbunden ist. Die Halteeinrichtung 10 weist ferner eine sich in Richtung der durch die Halteeinrichtung 10 aufgenommenen Pipettenspitzen 1 erstreckende Rotationsachse A auf. Die Rotationsachse A der Halteeinrichtung 10 verläuft somit im Wesentlichen parallel zu den Längsachsen L der durch die Aufnahmeelemente 11 der Halteeinrichtung 10 gehalterten Pipettenspitzen 1.

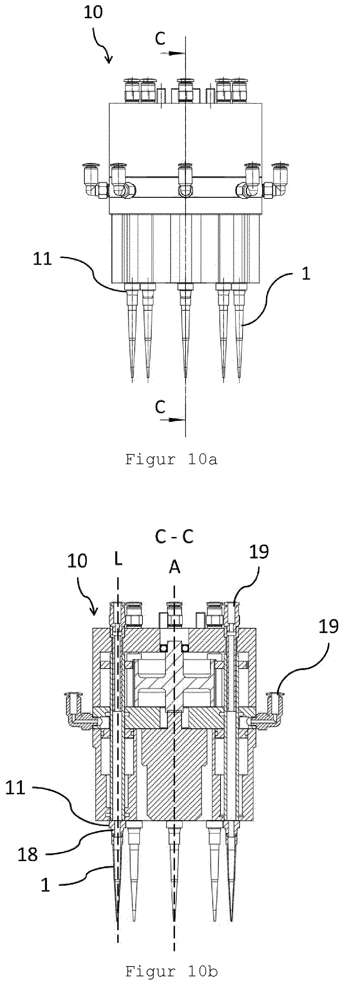

Figur 10a zeigt eine weitere Ausführungsform einer Halteeinrichtung 10 mit einer Mehrzahl von kreisförmig angeordneten Aufnahmeelementen 11 zur Aufnahme von Pipettenspitzen 1 in einer Seitenansicht. Wie aus dem in Figur 10b gezeigten Längsschnitt durch die Halteeinrichtung 10 entlang der Linie C-C in Figur 10a hervorgeht, können die Aufnahmeelemente 11 jeweils mit Hubfunktion ausgestattet sein, wodurch die Pipettenspitzen 1 entlang ihrer Längsachsen L kontrolliert abgesetzt und/oder aufgenommen werden können. Dadurch kann beispielsweise die Gefahr einer Kollision von in der Halteeinrichtung 10 aufgenommenen und bereits im zweiten Träger vorliegenden Pipettenspitzen eliminiert werden.

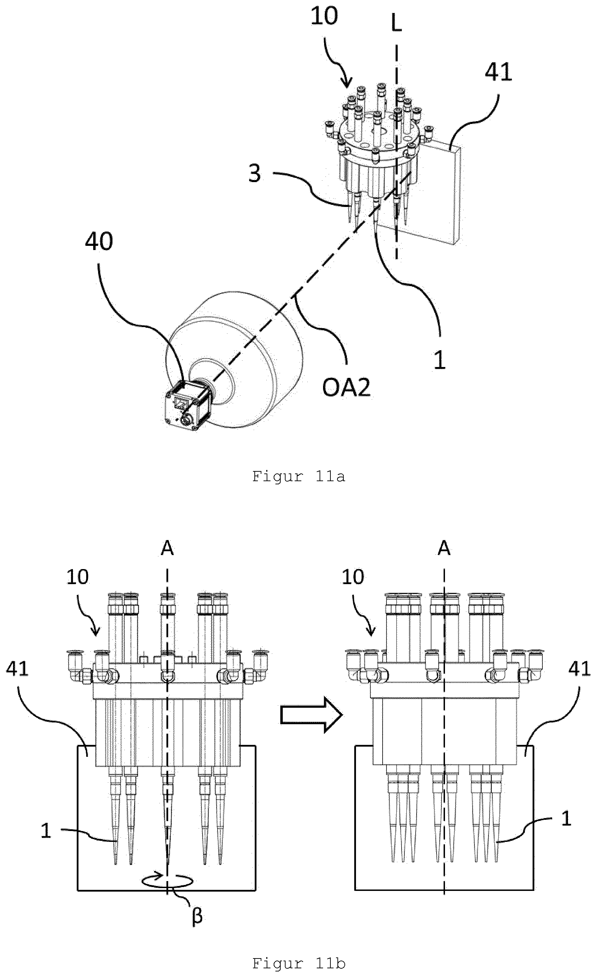

Figur 11a zeigt eine perspektivische Ansicht einer Anordnung umfassend eine Halteeinrichtung 10 und eine zweite Bilderfassungseinrichtung 40 gemäss der zweiten Ausführungsform der erfindungsgemässen Vorrichtung. Während der Erfassung der zweiten Bilddaten der in der insgesamt acht in der Halteeinrichtung 10 gehalterten Pipettenspitzen 1 ist die optische Achse OA2 der zweiten Bilderfassungseinrichtung 40 quer zur Längsachse L und auf die ihr zugewandten Teilsegmente der jeweiligen Pipettenspitzenmantelflächen 3 dieser acht Pipettenspitzen 1 ausgerichtet. Die Halteeinrichtung 10 ist dabei im Strahlengang zwischen Beleuchtungseinrichtung 41 und der zweiten Bilderfassungseinrichtung 40 positioniert.

Figur 11b zeigt die Halteeinrichtung 10 aus Figur 11a aus Sicht der zweiten Bilderfassungseinrichtung in Figur 11a in Richtung der Beleuchtungseinrichtung 41. Wie aus der Darstellung der Pipettenspitzen 1 in der linken Hälfe von Figur 11b hervorgeht, welche der Situation in Figur 11a entspricht, sind von den insgesamt acht Pipettenspitzen 1, welcher in der Halteeinrichtung 10 gehaltert sind, die Konturen von lediglich fünf Pipettenspitzen 1 für die zweite Bilderfassungseinrichtung erfassbar, da drei Pipettenspitzen durch drei der erfassbaren Pipettenspitzen 1 verdeckt werden. Damit die zweiten Bilddaten sämtlicher der in der Halteeinrichtung 10 gehalterten Pipettenspitzen 1 durch die zweite Bilderfassungseinrichtung erfasst werden können, kann die Halteeinrichtung 10 vor dem Erfassen der zweiten Bilddaten derart um ihre Rotationsachse A um einen Drehwinkel β gedreht werden. Das Ergebnis der Drehung der Halteeinrichtung 10 um einen Drehwinkel β von etwa 15° ist in der rechten Hälfte von Figur 11b dargestellt und zeigt, dass nun in Folge dieser Drehung die Konturen sämtlicher in der Halteeinrichtung 10 gehalterter Pipettenspitzen 1 durch die zweite Bilderfassungseinrichtung erfassbar sind. In der rechten Hälfte von Figur 11b existiert zwischen den im Strahlengang benachbart abgebildeten Pipettenspitzen 1 im Bereich der jeweiligen Aufnahmeelemente links und rechts bezüglich der jeweiligen Längsachse der Pipettenspitzen ein in dieser Darstellung nicht mehr mit blossem Auge erkennbarer Spalt, welcher jedoch von der zweiten Bilderfassungseinrichtung zuverlässig erfassbar ist.

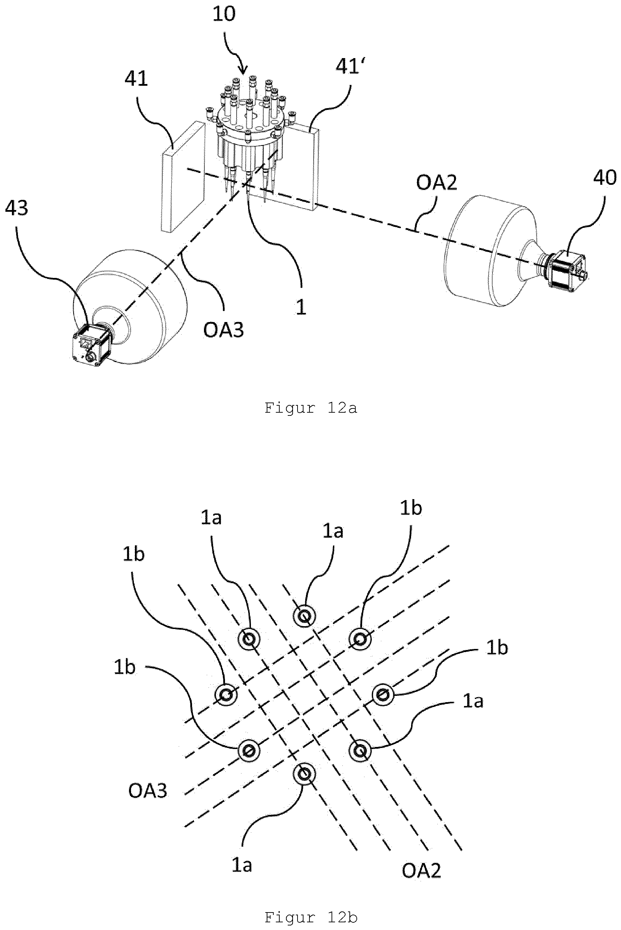

Figur 12a zeigt eine perspektivische Ansicht einer Anordnung umfassend eine Halteeinrichtung 10, eine zweite Bilderfassungseinrichtung 40 und eine dritte Bilderfassungseinrichtung 43. Die optischen Achsen OA2 und OA3 der zweiten bzw. der dritten Bilderfassungseinrichtung 40, 43 sind im Wesentlichen senkrecht zueinander und auf die den jeweiligen Bilderfassungseinrichtungen 40, 43 zugewandten Teilsegmente der jeweiligen Pipettenspitzenmantelflächen ausgerichtet. Die von der Halteeinrichtung 10 gehalterten Pipettenspitzen 1 sind dabei zwischen der zweiten Bilderfassungseinrichtung 40 und einer Beleuchtungseinrichtung 41 sowie auch zwischen der dritten Bilderfassungseinrichtung 43 und einer weiteren Beleuchtungseinrichtung 41' positioniert. Eine schematische Darstellung des Strahlengangs durch die in der Halteeinrichtung 10 gehalterten Pipettenspitzen 1 aus Figur 12a ist in Figur 12b dargestellt. Wie aus Figur 12b ersichtlich ist, sind die Konturen des ersten Teils der in der Halteeinrichtung 10 gehalterten Pipettenspitzen, also die Konturen der mit dem Bezugszeichen 1a versehenen Pipettenspitzen, vollständig durch die zweite Bilderfassungseinrichtung erfassbar, da die mit dem Bezugszeichen 1a versehenen Pipettenspitzen einzeln im Strahlengang der optischen Achse OA2 der zweiten Bilderfassungseinrichtung aufgelöst vorliegen. Die Konturen des zweiten Teils der in der Halteeinrichtung 10 gehalterten Pipettenspitzen, also die Konturen der mit dem Bezugszeichen 1b versehenen Pipettenspitzen, sind vollständig durch die dritte Bilderfassungseinrichtung erfassbar, da die mit dem Bezugszeichen 1b versehenen Pipettenspitzen einzeln im Strahlengang der optischen Achse OA3 der dritten Bilderfassungseinrichtung aufgelöst vorliegen. Analog zu dem in den Figuren 11a und 11b beschriebenen Ausführungsbeispiel kann es auch beim Vorliegen einer dritten Bilderfassungseinrichtung je nach Anordnung, Grösse und Abstand der gehalterten Pipettenspitzen vorteilhaft sein, die Halteeinrichtung 10 vor dem Erfassen der zweiten Bilddaten um ihre Rotationsachse um einen Drehwinkel β zu drehen, um die Konturen der in der Halteeinrichtung 10 gehalterten Pipettenspitzen 1a, 1b, vorzugsweise vollständig, durch die zweite und die dritte Bilderfassungseinrichtung 40, 43 erfassen zu können.

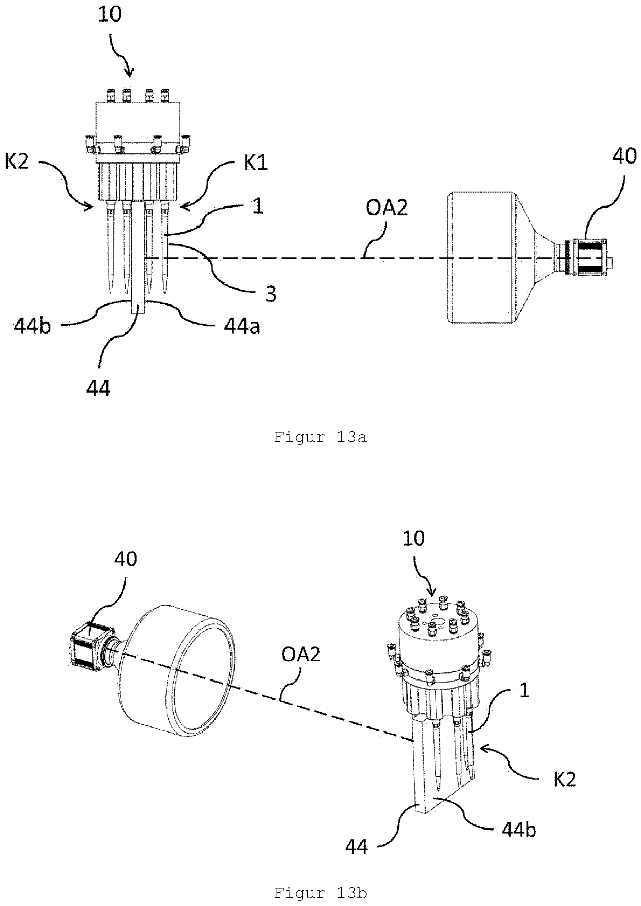

Figur 13a zeigt eine Seitenansicht einer Anordnung aus einer Halteeinrichtung 10 mit daran angebrachter Beleuchtungseinrichtung 44 und einer zweite Bilderfassungseinrichtung 40. Die Beleuchtungseinrichtung 44 weist zwei planparallele Lichtaussendeflächen 44a, 44b auf und teilt die kreisförmige Anordnung von Pipettenspitzen 1 in zwei Hälften, K1 und K2. Während der Erfassung der zweiten Bilddaten ist die optische Achse OA2 der zweiten Bilderfassungseinrichtung 40 senkrecht auf die Beleuchtungseinrichtung 44 ausgerichtet, und zwar auf die der zweiten Bilderfassungseinrichtung 40 zugewandte Lichtaussendefläche 44a. Die optische Achse OA2 der zweiten Bilderfassungseinrichtung ist während der Erfassung der zweiten Bilddaten ferner auch auf die der zweiten Bilderfassungseinrichtung 40 zugewandten Teilsegmente der jeweiligen Pipettenspitzenmantelflächen 3 ausgerichtet. Figur 13b zeigt eine Perspektivische Ansicht der Anordnung aus Figur 13a, wobei die zur zweiten Bilderfassungseinrichtung 40 abgewandte Lichtaussendefläche 44b sowie die zur zweiten Bilderfassungseinrichtung 40 abgewandte Hälfte K2 der kreisförmigen Anordnung von Pipettenspitzen 1 dargestellt ist. Bei Verwendung einer einzigen zweiten Bilderfassungseinrichtung 40, wie im Ausführungsbeispiel gemäss Figur 13a und 13b, erfolgt zunächst die Erfassung der zweiten Bilddaten derjenigen Pipettenspitzen 1, welche der der zweiten Bilderfassungseinrichtung 40 zugewandten Hälfte K1 angehören. Anschliessend erfolgt eine Drehung der Halteeinrichtung 10 um 180°, um die von der ersten Hälfte K1 durch die Beleuchtungseinrichtung 44 getrennte andere Hälfte K2 an Pipettenspitzen 1 der zweiten Bilderfassungseinrichtung 40 zuzuwenden. Alternativ ist es bei Verwendung einer weiteren Bilderfassungseinrichtung zum Erfassen der zweiten Bilddaten 42 (nicht gezeigt) möglich, die zweiten Bilddaten der Pipettenspitzen 1 beider Hälften K1 und K2 zeitgleich zu erfassen. Dazu werden die beiden Bilderfassungseinrichtungen zum Erfassen von zweiten Bilddaten 40, 42 gegengleich auf die zwischen den beiden Bilderfassungseinrichtungen 40, 42 positionierte Halteeinrichtung 10 ausgerichtet.

## Patentansprüche

1. Verfahren zum Überprüfen von sich jeweils entlang einer Längsachse (L) erstreckenden Pipettenspitzen (1), das Verfahren umfassend die folgenden Verfahrensschritte:
a) Bereitstellen von Pipettenspitzen (1), welche in einem ersten Träger (20) angeordnet sind;
b) Aufnahme von Pipettenspitzen (1) aus dem ersten Träger (20) durch eine Halteeinrichtung (10) umfassend eine Mehrzahl von Aufnahmeelementen (11) zur Aufnahme jeweils einer Pipettenspitze (1);
c) Erfassen von ersten Bilddaten der jeweiligen Pipettenspitzenauslassöffnungen (2) der durch die Halteeinrichtung (10) aufgenommenen Pipettenspitzen (1) durch eine erste Bilderfassungseinrichtung (30);
d) Erfassen von zweiten Bilddaten der in der Halteeinrichtung (10) gehalterten Pipettenspitzen (1) durch eine zweite Bilderfassungseinrichtung (40), deren optische Achse (OA2) während der Erfassung der zweiten Bilddaten quer zur jeweiligen Längsachse (L) der in der Halteeinrichtung (10) gehalterten Pipettenspitzen (1) und auf die der zweiten Bilderfassungseinrichtung (40) zugewandten Teilsegmente der jeweiligen Pipettenspitzenmantelflächen (3) der gehalterten Pipettenspitzen (1) ausgerichtet ist;
e) Ermitteln, ob die ersten und/oder zweiten Bilddaten innerhalb von vordefinierten Zulässigkeitsgrenzen liegen oder nicht, mit Hilfe einer Datenverarbeitungsanlage (70);
f) Abwerfen derjenigen Pipettenspitzen (1), deren in Schritt e) ermittelte erste und/oder zweite Bilddaten ausserhalb der vordefinierten Zulässigkeitsgrenzen liegen, in einen Abfallbehälter (50) durch die Halteeinrichtung (10);
g) Abgabe derjenigen Pipettenspitzen (1), deren in Schritt e) ermittelte erste und zweite Bilddaten innerhalb der vordefinierten Zulässigkeitsgrenzen liegen, in einen zweiten Träger (20'), insbesondere in ein Rack (21, 21');
wobei in Verfahrensschritt d) die zweiten Bilddaten mehrerer der in der Halteeinrichtung (10) gehalterten Pipettenspitzen (1), vorzugsweise aller in der Halteeinrichtung (10) gehalterten Pipettenspitzen (1), gleichzeitig erfasst werden.

2. Verfahren nach Anspruch 1, wobei:
- die in Schritt a) bereitgestellten Pipettenspitzen (1) im ersten Träger (20) in einer ersten Matrixanordnung (M1) von Reihen und Spalten angeordnet sind, insbesondere in einem ersten Rack (21);
- in Schritt b) eine Reihe oder Spalte, bevorzugt eine komplette Reihe oder komplette Spalte, von Pipettenspitzen (1) aus der ersten Matrixanordnung (M1), insbesondere aus dem ersten Rack (21), durch die Halteeinrichtung (10) aufgenommen wird, wobei die Aufnahmeelemente (11) der Halteeinrichtung (10) in einer Reihe angeordnet sind, und wobei die Längsachsen (L) der durch die Aufnahmeelemente (11) gehalterten Pipettenspitzen (1) im Wesentlichen in einer gemeinsamen Ebene (E) liegen;
- in Schritt c) die optische Achse (OA1) der ersten Bilderfassungseinrichtung während der Erfassung der ersten Bilddaten gleichgerichtet, insbesondere parallel, zur jeweiligen Längsachse (L) der in der Halteeinrichtung (10) gehalterten Pipettenspitzen (1) und auf die jeweilige Pipettenspitzenauslassöffnung (2) ausgerichtet ist;
- in Schritt d) die optische Achse (OA2) der zweiten Bilderfassungseinrichtung (40) während der Erfassung der zweiten Bilddaten im Wesentlichen senkrecht auf die durch die gehalterten Pipettenspitzen (1) definierte Ebene (E) ausgerichtet ist, sodass alle in der Halteeinrichtung (10) gehalterten Pipettenspitzen (1) im Wesentlichen in einer Bildebene der zweiten Bilderfassungseinrichtung (40) angeordnet sind, wobei die zweiten Bilddaten aller in der Halteeinrichtung (10) gehalterten Pipettenspitzen (1) gleichzeitig erfasst werden;
- der zweite Träger (20') in Schritt g) eine Vielzahl von Löchern (22) in einer zweiten Matrixanordnung (M2) von Reihen und Spalten aufweist, welche Löcher (22) zum Halten der abgegebenen Pipettenspitzen (1) geeignet sind; und
wobei die Pipettenspitzen (1) in Verfahrensschritt g) derart durch die Halteeinrichtung (10) abgegeben werden, dass die jeweiligen Reihen oder Spalten von Löchern (22) des zweiten Trägers (20') nacheinander aufgefüllt werden, ohne dass dabei zwischen zwei abgegebenen Pipettenspitzen (1) ein oder mehrere leere Löcher (22, 22') verbleiben.

3. Verfahren nach Anspruch 1, wobei:
- die in Schritt a) bereitgestellten Pipettenspitzen (1) im ersten Träger (20) in wenigstens einer kreisförmigen Anordnung (K), insbesondere in wenigstens einer kreisförmigen Anordnung (K) von acht in Umfangsrichtung der kreisförmigen Anordnung (K) gleichmässig voneinander beabstandeten Pipettenspitzen (1), angeordnet sind;
- in Schritt b) eine kreisförmige Anordnung (K), insbesondere eine komplette kreisförmige Anordnung (K), von Pipettenspitzen (1) aus dem ersten Träger (20) durch die Halteeinrichtung (10) aufgenommen wird;
- optional in Schritt d) die Halteeinrichtung (10) vor dem Erfassen der zweiten Bilddaten derart um ihre in Richtung der durch die Halteeinrichtung (10) aufgenommenen Pipettenspitzen (1) verlaufende Rotationsachse (A) um einen Drehwinkel (β) gedreht wird, dass die Konturen zumindest eines Teils, vorzugsweise aller, der in der Halteeinrichtung (10) gehalterten Pipettenspitzen (1), bevorzugt vollständig, durch die zweite Bilderfassungseinrichtung (40) erfassbar sind.

4. Verfahren nach Anspruch 3, wobei in Schritt d) die Halteeinrichtung (10) während der Erfassung der zweiten Bilddaten um ihre in Richtung der durch die Halteeinrichtung (10) aufgenommenen Pipettenspitzen (1) verlaufende Rotationsachse (A) gedreht wird, insbesondere führt die Halteeinrichtung (10) während der Erfassung der zweiten Bilddaten zumindest eine dreiviertel Umdrehung um ihre Rotationsachse (A) aus, und wobei optional in Schritt d) die durch die Halteeinrichtung (10) aufgenommenen Pipettenspitzen (1) jeweils um ihre Längsachse (L) gedreht werden.

5. Verfahren nach Anspruch 3 oder 4, wobei die zweiten Bilddaten der in der Halteeinrichtung (10) gehalterten Pipettenspitzen (1) in Schritt d) zusätzlich durch eine dritte Bilderfassungseinrichtung (43), deren optische Achse (OA3) während der Erfassung der zweiten Bilddaten im Wesentlichen senkrecht zur optischen Achse (OA2) der zweiten Bilderfassungseinrichtung (40) und auf die der dritten Bilderfassungseinrichtung (43) zugewandten Teilsegmente der jeweiligen Pipettenspitzenmantelflächen (3) der gehalterten Pipettenspitzen (1) ausgerichtet ist, erfasst werden, wobei optional in Schritt d) die Halteeinrichtung (10) vor dem Erfassen der zweiten Bilddaten derart um ihre in Richtung der durch die Halteeinrichtung (10) aufgenommenen Pipettenspitzen (1) verlaufende Rotationsachse (A) um einen Drehwinkel (β) gedreht wird, dass die Konturen eines ersten Teils (1a) der in der Halteeinrichtung (10) gehalterten Pipettenspitzen (1), bevorzugt vollständig, durch die zweite Bilderfassungseinrichtung (40) erfassbar sind, und dass die Konturen eines zweiten Teils (1b) der in der Halteeinrichtung (10) gehalterten Pipettenspitzen (1), bevorzugt vollständig, durch die dritte Bilderfassungseinrichtung (43) erfassbar sind.

6. Verfahren nach Anspruch 3, wobei die optische Achse (OA2) der zweiten Bilderfassungseinrichtung (40) während der Erfassung der zweiten Bilddaten in Schritt d) ferner senkrecht auf eine an der Halteeinrichtung (10) befestigte und die kreisförmige Anordnung (K) von Pipettenspitzen (1) in zwei Hälften (K1, K2) teilende Beleuchtungseinrichtung (44) ausgerichtet ist, wobei die Beleuchtungseinrichtung (44) zwei im Wesentlichen planparallele Lichtaussendeflächen (44a, 44b) zum Aussenden von Licht in Richtung der zweiten Bilderfassungseinrichtung (40) und entgegengesetzt zu dieser Richtung aufweist, wobei in Schritt d)
i. die zweiten Bilddaten der einen Hälfte (K1) der Pipettenspitzen (1) erfasst werden und die Halteeinrichtung (10) vor der Erfassung der zweiten Bilddaten der anderen Hälfte (K2) der Pipettenspitzen (1) um ihre in Richtung der durch die Halteeinrichtung (10) aufgenommenen Pipettenspitzen (1) verlaufende Rotationsachse (A) um 180° gedreht wird; oder
ii. eine weitere Bilderfassungseinrichtung (42) zum Erfassen von zweiten Bilddaten der in der Halteeinrichtung (10) gehalterten Pipettenspitzen (1) vorgesehen ist, deren optische Achse gegengleich zur optischen Achse (OA2) der zweiten Bilderfassungseinrichtung (40) ausgerichtet ist, wobei die zweiten Bilddaten beider Hälften (K1, K2) der kreisförmigen Anordnung (K) von Pipettenspitzen (1) zeitgleich erfasst werden.

7. Verfahren nach Anspruch **4,** wobei die optische Achse (OA2) der zweiten Bilderfassungseinrichtung (40) während der Erfassung der zweiten Bilddaten in Schritt d) ferner auf eine an der Halteeinrichtung (10) befestigte und im Zentrum der kreisförmigen Anordnung (K) von Pipettenspitzen (1) angeordnete Beleuchtungseinrichtung (45) ausgerichtet ist, welche beim Erfassen der zweiten Bilddaten in Schritt d) Licht in Richtung der zweiten Bilderfassungseinrichtung (40) aussendet.

8. Verfahren nach einem der vorhergehenden Ansprüche, wobei die ersten Bilddaten in Schritt c)beim Bewegen der in der Halteeinrichtung (10) gehalterten Pipettenspitzen (1) quer zur optischen Achse (OA1) der ersten Bilderfassungseinrichtung (30) und durch die optische Achse (OA1) der ersten Bilderfassungseinrichtung (30) relativ zueinander erfasst werden, wobei das Eintreten der jeweiligen Pipettenspitzen (1), insbesondere der jeweiligen Pipettenspitzenauslassöffnungen (2), in die optische Achse (OA1) der ersten Bilderfassungseinrichtung (30) durch eine Messeinrichtung (31), insbesondere eine Lichtschranke (31), festgestellt wird und das Erfassen der ersten Bilddaten durch die erste Bilderfassungseinrichtung (30) auslöst, wobei bevorzugt lediglich die Halteeinrichtung (10) bewegt wird und die erste Bilderfassungseinrichtung (30) ortsfest verbleibt, wobei bevorzugt die jeweiligen Pipettenspitzenauslassöffnungen (2) der in der Halteeinrichtung (10) gehalterten Pipettenspitzen (1) im Wesentlichen in einer einzigen Bildebene der ersten Bilderfassungseinrichtung (30) an der ersten Bilderfassungseinrichtung vorbeigeführt werden.

9. Verfahren nach einem der vorhergehenden Ansprüche, wobei Schritt d) die folgenden Verfahrensschritte umfasst:
i. Aufnehmen eines ersten Bildes der in der Halteeinrichtung (10) gehalterten Pipettenspitzen (1), wobei sich die Pipettenspitzen (1) jeweils in einer ersten Position (P1) befinden;
ii. Drehen der in der Halteeinrichtung (10) gehalterten Pipettenspitzen (1) um ihre Längsachse (L) um einen vorbestimmten Drehwinkel (α) in eine zweite Position (P2);
iii. Aufnehmen eines zweiten Bildes der in der Halteeinrichtung (10) gehalterten Pipettenspitzen (1), wobei sich die Pipettenspitzen (1) jeweils in der zweiten Position (P2) befinden;
wobei der Drehwinkel (α) zwischen der ersten Position (P1) und der zweiten Position (P2) wenigstens im Wesentlichen 90°, bevorzugt zwischen im Wesentlichen 90° und im Wesentlichen 180°, besonders bevorzugt im Wesentlichen 180°, beträgt.

10. Verfahren nach Anspruch 9, wobei die Pipettenspitzen (1) zum Aufnehmen weiterer Bilder, bevorzugt weiterer ein bis vier Bilder, in eine der Anzahl der weiteren Bilder entsprechende Anzahl von Zwischenpositionen (P3, P4, P5, P6) gedreht werden, welche Zwischenpositionen (P3, P4, P5, P6) zwischen der ersten Position (P1) und der zweiten Position (P2) liegen und bevorzugt gleichmässig zwischen der ersten Position (P1) und der zweiten Position (P2) verteilt sind.

11. Verfahren nach einem der vorhergehenden Ansprüche, wobei die Pipettenspitzen (1) jeweils kraftschlüssig an den Aufnahmeelementen (11) der Halteeinrichtung (10) gehaltert werden, bevorzugt durch Beaufschlagung der Pipettenspitzen (1) mit Unterdruck.

12. Verfahren nach einem der vorhergehenden Ansprüche, wobei die Datenverarbeitungsanlage (70) eine Benutzerschnittstelle (71) umfasst und das Verfahren zusätzlich Verfahrensschritt:
h) Auswählen von wenigstens einem Aufnahmeelement (11) der Halteeinrichtung (10) durch einen Benutzer, wobei die an den ausgewählten Aufnahmeelementen (11) gehalterten Pipettenspitzen (1) in Folge der Auswahl unabhängig von den erfassten ersten und zweiten Bilddaten in Schritt f) als Ausschuss verworfen werden;
umfasst, wobei Schritt h) vor irgendeinem der Schritte a) bis f) durchgeführt wird.

13. Vorrichtung (100) zum Überprüfen von sich jeweils entlang einer Längsachse (L) erstreckenden Pipettenspitzen (1), insbesondere ausgebildet zur Durchführung eines Verfahrens nach einem der vorhergehenden Ansprüche, die Vorrichtung (100) umfassend:
- Eine zur Bereitstellung eines ersten Trägers (20) enthaltend Pipettenspitzen (1) ausgebildete Aufnahmeposition (101);
- Eine Halteeinrichtung (10) zum Aufnehmen von Pipettenspitzen (1) aus dem an der Aufnahmeposition (101) bereitgestellten ersten Träger (20), die Halteeinrichtung (10) umfassend eine Mehrzahl von Aufnahmeelementen (11), welche Aufnahmeelemente (11) zur Aufnahme jeweils einer Pipettenspitze (1) ausgebildet sind;
- Eine erste Bilderfassungseinrichtung (30) zum Erfassen von ersten Bilddaten der jeweiligen Pipettenspitzenauslassöffnungen (2) der durch die Halteeinrichtung (10) aufgenommenen Pipettenspitzen (1);
- Eine zweite Bilderfassungseinrichtung (40) zum Erfassen von zweiten Bilddaten der in der Halteeinrichtung (10) gehalterten Pipettenspitzen (1);
- Eine Datenverarbeitungsanlage (70), welche signalleitend mit der ersten Bilderfassungseinrichtung (30), der zweiten Bilderfassungseinrichtung (40) und der Halteeinrichtung (10) verbunden ist, und in der Zulässigkeitsgrenzen für die ersten und/oder zweiten Bilddaten vordefiniert sind;
- Einen zur Aufnahme von durch die Halteeinrichtung (10) abgeworfenen Pipettenspitzen (1) ausgebildeten Abfallbehälter (50);
- Eine Abgabeposition (102), auf der ein zweiter Träger (20'), insbesondere ein Rack (20, 20') bereitstellbar ist;
wobei die Vorrichtung (100) Mittel (12) zum Ausrichten der optischen Achse (OA1) der ersten Bilderfassungseinrichtung (30) parallel zur jeweiligen Längsachse (L) der in der Halteeinrichtung (10) gehalterten Pipettenspitzen (1) und auf die jeweiligen Pipettenspitzenauslassöffnungen (2) und zum Ausrichten der optischen Achse (OA2) der zweiten Bilderfassungseinrichtung (40) quer zur jeweiligen Längsachse (L) der in der Halteeinrichtung (10) gehalterten Pipettenspitzen (1) und auf die der zweiten Bilderfassungseinrichtung (40) zugewandten Teilsegmente der jeweiligen Pipettenspitzenmantelflächen (3) der gehalterten Pipettenspitzen (1) aufweist, wobei die Halteeinrichtung (10) zwischen der Aufnahmeposition (101), der ersten Bilderfassungseinrichtung (30), der zweiten Bilderfassungseinrichtung (40), dem Abfallbehälter (50) und/oder der Abgabeposition (102) hin und her bewegbar ist.

14. Vorrichtung (100) nach Anspruch 13, wobei
- die Pipettenspitzen (1) im ersten Träger (20) in einer ersten Matrixanordnung (M1) von Reihen und Spalten angeordnet sind, insbesondere handelt es sich bei dem ersten Träger (20) um ein erstes Rack (21);
- die Halteeinrichtung (10) zur Aufnahme einer Reihe oder Spalte von Pipettenspitzen (1) aus der ersten Matrixanordnung (M1) von Reihen und Spalten, insbesondere aus dem ersten Rack (21), ausgebildet ist und die Aufnahmeelemente (11) der Halteeinreichung (10) in einer Reihe angeordnet sind, wobei die Längsachsen (L) der durch die Aufnahmeelemente (11) gehalterten Pipettenspitzen (1) im Wesentlichen in einer gemeinsamen Ebene (E) liegen;
- der zweite Träger (20'), insbesondere das Rack (21, 21') eine Vielzahl von Löchern (22) in einer zweiten Matrixanordnung (M2) von Reihen und Spalten aufweist, welche Löcher (22) zum Halten der Pipettenspitzen (1) geeignet sind;
- die Mittel (12) zum Ausrichten der optischen Achse (OA2) der zweiten Bilderfassungseinrichtung (40) zum Ausrichten der optischen Achse (OA2) der zweiten Bilderfassungseinrichtung (40) im Wesentlichen senkrecht auf die durch die gehalterten Pipettenspitzen (1) definierte Ebene (E) ausgebildet sind; und
- wobei die Halteeinrichtung (10) zum nacheinander Auffüllen der jeweiligen Reihen oder Spalten von Löchern (22) des zweiten Trägers (20') mit Pipettenspitzen (1) ausgebildet ist, ohne dass dabei zwischen zwei abgegebenen Pipettenspitzen (1, 1') ein oder mehrere leere Löcher (22, 22') verbleiben.

15. Vorrichtung (100) nach Anspruch 13, wobei die Pipettenspitzen (1) im ersten Träger (20) in einer kreisförmigen Anordnung (K) angeordnet sind, und wobei die Anordnung der Aufnahmeelemente (11) der Halteeinrichtung (10) der kreisförmigen Anordnung (K) der Pipettenspitzen (1) im ersten Träger (20) entspricht.

16. Vorrichtung (100) nach Anspruch 15, wobei die Halteeinrichtung (10) Mittel (121) zum Drehen der Halteeinrichtung (10) um ihre in Richtung der durch die Halteeinrichtung (10) aufgenommenen Pipettenspitzen (1) verlaufende Rotationsachse (A) aufweist.

17. Vorrichtung (100) nach Anspruch 15 oder 16, wobei die Halteeinrichtung (10)
- eine an der Halteeinrichtung (10) befestigte und die kreisförmige Anordnung (K) von Pipettenspitzen (1) in zwei Hälften (K1, K2) teilende Beleuchtungseinrichtung (44) umfasst, wobei die Beleuchtungseinrichtung (44) zwei planparallele Lichtaussendeflächen (44a, 44b) zum Aussenden von Licht in entgegengesetzte Richtungen aufweist; oder
- eine an der Halteeinrichtung (10) befestigte und im Zentrum der kreisförmigen Anordnung (K) von Pipettenspitzen (1) angeordnete Beleuchtungseinrichtung (45) zum Aussenden von Licht in Richtung der zweiten Bilderfassungseinrichtung (40) umfasst, wobei die Beleuchtungseinrichtung (45) insbesondere zylinderförmig mit einer umlaufenden Lichtaussendefläche (45a) ausgebildet ist.

18. Vorrichtung (100) nach einem der Ansprüche 13 bis 17, wobei die Vorrichtung (100) ferner eine Messeinrichtung (31), insbesondere eine Lichtschranke (31), zum Feststellen des Eintritts der jeweiligen Pipettenspitzen (1), insbesondere der jeweiligen Pipettenspitzenauslassöffnungen (2), in die optische Achse (OA1) der ersten Bilderfassungseinrichtung (30) umfasst, welche Messeinrichtung (31) signalleitend mit der ersten Bilderfassungseinrichtung (30) verbunden ist und zum Auslösen der Erfassung der ersten Bilddaten durch die erste Bilderfassungseinrichtung (30) ausgebildet ist.

19. Vorrichtung (100) nach einem der Ansprüche 13 bis 18, wobei die Halteeinrichtung (10) Mittel (13) zum Drehen der in der Halteeinrichtung (10) gehalterten Pipettenspitzen (1) um ihre Längsachse (L) aufweist, welche Mittel (13) zum Drehen der Pipettenspitzen (1) aus einer ersten Position (P1) in eine zweite Position (P2) um einen Drehwinkel (α) von wenigstens im Wesentlichen 90°, bevorzugt zwischen im Wesentlichen 90° und im Wesentlichen 180°, besonders bevorzugt von im Wesentlichen 180°, ausgebildet sind.

20. Vorrichtung (100) nach Anspruch 19, wobei die Mittel (13) zum Drehen der in der Halteeinrichtung (10) gehalterten Pipettenspitzen (1) umfassen:
- Ein Zahnrad (14) an jedem Aufnahmeelement (11), welche Zahnräder (14) zur Ausbildung eines Zahnradverbunds (15) ineinandergreifen und durch einen, bevorzugt an einem Ende des Zahnradverbunds (15) angeordneten, Drehantrieb (16) drehbar sind; oder
- Ein Zahnrad (14) an jedem Aufnahmeelement (11), wobei jeweils zwei benachbarte Zahnräder (14, 14') über ein Zwischenzahnrad (141) unter Ausbildung eines Zahnradverbunds (15) miteinander in Wirkverbindung stehen, wobei wenigstens eines der Zahnräder (14) und/oder wenigstens eines der Zwischenzahnräder (141) des Zahnradverbunds (15) durch einen Drehantrieb (16) drehbar ist; oder
- Ein Zahnrad (14) an jedem Aufnahmeelement (11), welche Zahnräder (14) nicht ineinandergreifen und durch einen gemeinsamen Zahnstangentrieb (17) drehbar sind; oder
- Ein Zahnrad (14) an jedem Aufnahmeelement (11), welche Zahnräder (14) nicht ineinandergreifen und durch einen gemeinsamen Zahnriemen (142) drehbar sind, wobei bevorzugt Abstützmittel (143) zum Sicherstellen der Wirkverbindung zwischen den Zahnrädern (14) und dem Zahnriemen (142) vorhanden sind; oder
- Einen Einzelantrieb (80), insbesondere einen Elektromotor (80), an jedem Aufnahmeelement (11), wobei jedes Aufnahmeelement (11) durch den Einzelantrieb (80) unabhängig von den restlichen Aufnahmeelementen (11) der Halteeinrichtung (10) drehbar ist; oder
- Eine Scheibe (91) an jedem Aufnahmeelement (11), welche Scheiben (91) jeweils in Umfangsrichtung (U) der Aufnahmeelemente (11) drehfest an den Aufnahmeelementen (11) angeordnet sind und an welchen Scheiben (91) jeweils exzentrisch ein Stangenantrieb (90) zur Umformung einer Hin- und Herbewegung einer Antriebsstange (92) in eine Drehbewegung der Aufnahmeelemente (11) ansetzt.

21. Vorrichtung (100) nach einem der Ansprüche 13 bis 20, wobei die Mittel (13) zum Drehen der in der Halteeinrichtung (10) gehalterten Pipettenspitzen (1) zum Drehen der Pipettenspitzen (1) in Zwischenpositionen (P3, P4, P5, P6) ausgebildet sind, welche Zwischenpositionen (P3, P4, P5, P6) zwischen der ersten Position (P1) und der zweiten Position (P2) liegen und bevorzugt gleichmässig zwischen der ersten Position (P1) und der zweiten Position (P2) verteilt sind.

22. Vorrichtung (100) nach Anspruch 14 oder einem der Ansprüche 18 bis 21, wobei die Anzahl der Aufnahmeelemente (11) der Halteeinrichtung (10) mit der Anzahl der in einer Reihe oder Spalte der ersten Matrixanordnung (M1) bereitgestellten Pipettenspitzen (1) übereinstimmt, wobei die Halteeinrichtung (10) bevorzugt wenigstens 5, bevorzugt wenigstens 10 und noch besser wenigstens 15 Aufnahmeelemente (11) umfasst.

23. Vorrichtung (100) nach einem der Ansprüche 13 bis 22, wobei die Aufnahmeelemente (11) jeweils einen, insbesondere konisch geformten, Koppelansatz (18) umfassen, welcher fluidleitend mit einem Vakuumanschluss (19) verbunden oder verbindbar ist, um die Pipettenspitzen (1) durch Beaufschlagung mit Unterdruck an den Aufnahmeelementen (11) der Halteeinrichtung (10) zu haltern.

24. Vorrichtung (100) nach Anspruch 14 oder einem der Ansprüche 18 bis 23, wobei die Aufnahmeelemente (11) der Halteeinrichtung (10) in Bezug zueinander beweglich ausgebildet sind, so dass ihre Position zueinander an die erste Matrixanordnung (M1) und/oder die zweite Matrixanordnung (M2) von Pipettenspitzen angepasst werden kann.

25. Spritzgiessanlage (200) umfassend wenigstens eine Vorrichtung (100) zum Überprüfen von Pipettenspitzen (1) nach einem der Ansprüche 13 bis 24.

## Claims

1. A method of inspecting pipette tips (1) each extending along a longitudinal axis (L), the method comprising the following method steps:
a) Providing pipette tips (1) arranged in a first carrier (20);
b) Picking up pipette tips (1) from the first carrier (20) by a holding device (10) comprising a plurality of pick-up elements (11) for receiving one pipette tip (1) each;
c) Acquiring first image data of the respective pipette tip outlet openings (2) of the pipette tips (1) picked up by the holding device (10) by a first image acquisition device (30);
d) Acquiring second image data of the pipette tips (1) held in the holding device (10) by a second image acquisition device (40), the optical axis (OA2) of which is aligned during the acquisition of the second image data transversely to the respective longitudinal axis (L) of the pipette tips (1) held in the holding device (10) and onto the partial segments of the respective pipette tip jacket surfaces (3) of the held pipette tips (1) facing the second image acquisition device (40);
e) Determining whether or not the first and/or second image data are within predefined allowable limits using a data processing system (70);
f) Discarding those pipette tips (1) whose first and/or second image data determined in step e) lie outside the predefined allowable limits into a waste container (50) by the holding device (10);
g) Dispensing those pipette tips (1) whose first and second image data determined in step e) lie within the predefined allowable limits into a second carrier (20'), in particular into a rack (21, 21');
wherein in method step d) the second image data of several of the pipette tips (1) held in the holding device (10),
preferably of all pipette tips (1) held in the holding device (10), are acquired simultaneously.

2. The method according to claim 1, wherein:
- the pipette tips (1) provided in step a) are arranged in the first carrier (20) in a first matrix arrangement (M1) of rows and columns, in particular in a first rack (21);
- in step b) a row or column, preferably a complete row or complete column, of pipette tips (1) from the first matrix arrangement (M1), in particular from the first rack (21), is picked up by the holding device (10), wherein the pick-up elements (11) of the holding device (10) are arranged in a row, and wherein the longitudinal axes (L) of the pipette tips (1) held by the pick-up elements (11) lie substantially in a common plane (E);
- in step c) the optical axis (OA1) of the first image acquisition device is aligned in the same direction, in particular parallel, to the respective longitudinal axis (L) of the pipette tips (1) held in the holding device (10) and onto the respective pipette tip outlet opening (2) during the acquisition of the first image data;
- in step d) the optical axis (OA2) of the second image acquisition device (40) is aligned substantially perpendicular to the plane (E) defined by the held pipette tips (1) during the acquisition of the second image data, so that all pipette tips (1) held in the holding device (10) are arranged substantially in one image plane of the second image acquisition device (40), wherein the second image data of all pipette tips (1) held in the holding device (10) are acquired simultaneously;
- in step g), the second carrier (20') has a plurality of holes (22) in a second matrix arrangement (M2) of rows and columns, the holes (22) being suitable for holding the dispensed pipette tips (1); and
wherein the pipette tips (1) are dispensed in method step g) by the holding device (10) in such a way that the respective rows or columns of holes (22) of the second carrier (20') are filled up one after the other without leaving one or more empty holes (22, 22') between two dispensed pipette tips (1).

3. The method according to claim 1, wherein:
- the pipette tips (1) provided in step a) are arranged in the first carrier (20) in at least one circular array (K), in particular in at least one circular array (K) of eight pipette tips (1) uniformly spaced from one another in the circumferential direction of the circular array (K);
- in step b) a circular array (K), in particular a full circular array (K), of pipette tips (1) is picked up from the first carrier (20) by the holding device (10);
- optionally, in step d), the holding device (10) is rotated about its axis of rotation (A) extending in the direction of the pipette tips (1) held by the holding device (10) by an angle of rotation (β) prior to the acquisition of the second image data in such a way that the contours of at least some, preferably all, of the pipette tips (1) held in the holding device (10), preferably completely, can be detected by the second image acquisition device (40).

4. The method according to claim 3, wherein in step d) the holding device (10) is rotated about its axis of rotation (A) running in the direction of the pipette tips (1) picked up by the holding device (10) during the acquisition of the second image data, in particular the holding device (10) performs at least three quarters of a rotation about its axis of rotation (A) during the acquisition of the second image data, and wherein optionally in step d) the pipette tips (1) picked up by the holding device (10) are each rotated about their longitudinal axis (L).

5. The method according to claim 3 or 4, wherein the second image data of the pipette tips (1) held in the holding device (10) are additionally acquired in step d) by a third image acquisition device (43), the optical axis (OA3) of which is aligned during the acquisition of the second image data substantially perpendicular to the optical axis (OA2) of the second image acquisition device (40) and onto the partial segments, facing the third image acquisition device (43), of the respective pipette tip jacket surfaces (3) of the picked-up pipette tips (1), wherein optionally in step d) the holding device (10) is rotated about its axis of rotation (A) extending in the direction of the pipette tips (1) picked up by the holding device (10) by an angle of rotation (β) prior to the acquisition of the second image data in such a way that the contours of a first part (1a) of the pipette tips (1) held in the holding device (10), preferably completely, can be detected by the second image detection device (40), and in that the contours of a second part (1b) of the pipette tips (1) held in the holding device (10) can be detected, preferably completely, by the third image detection device (43).

6. The method according to claim 3, wherein the optical axis (OA2) of the second image acquisition device (40) during the acquisition of the second image data in step d) is further aligned perpendicular to an illumination device (44) attached to the holding device (10) and dividing the circular array (K) of pipette tips (1) into two halves (K1, K2), said illumination device (44) having two substantially plane-parallel light emitting surfaces (44a, 44b) for emitting light in the direction of said second image acquisition device (40) and opposite to said direction, wherein, in step d)
i. the second image data of one half (K1) of the pipette tips (1) are acquired and the holding device (10) is rotated by 180° about its axis of rotation (A) extending in the direction of the pipette tips (1) picked up by the holding device (10) before the second image data of the other half (K2) of the pipette tips (1) are acquired; or
ii. a further image acquisition device (42) for acquiring second image data of the pipette tips (1) held in the holding device (10) is provided, the optical axis of which is aligned opposite to the optical axis (OA2) of the second image acquisition device (40), wherein the second image data of both halves (K1, K2) of the circular array (K) of pipette tips (1) are acquired simultaneously.

7. The method according to claim 4, wherein during the acquisition of the second image data in step d), the optical axis (OA2) of the second image acquisition device (40) is further aligned with an illumination device (45) attached to the holding device (10) and located at the center of the circular array (K) of pipette tips (1), which illumination device emits light toward the second image acquisition device (40) during the acquisition of the second image data in step d).

8. The method according to any one of the preceding claims, wherein the first image data in step c) is acquired when moving the pipette tips (1) held in the holding device (10) transversely to the optical axis (OA1) of the first image acquisition device (30) and through the optical axis (OA1) of the first image acquisition device (30) relative to each other, wherein the entry of the respective pipette tips (1), in particular of the respective pipette tip outlet openings (2), into the optical axis (OA1) of the first image acquisition device (30) is detected by a measuring device (31), in particular a light barrier (31), and triggers the acquisition of the first image data by the first image acquisition device (30), wherein preferably only the holding device (10) is moved and the first image acquisition device (30) remains stationary, wherein preferably the respective pipette tip outlet openings (2) of the pipette tips (1) held in the holding device (10) are guided past the first image acquisition device essentially in a single image plane of the first image acquisition device (30).

9. The method according to any one of the preceding claims, wherein step d) comprises the following method steps:
i. Acquiring a first image of the pipette tips (1) held in the holding device (10), wherein the pipette tips (1) are each in a first position (P1);
ii. Rotating the pipette tips (1) held in the holding device (10) about their longitudinal axis (L) by a predetermined angle of rotation (α) to a second position (P2);
iii. Acquiring a second image of the pipette tips (1) held in the holding device (10), the pipette tips (1) each being in the second position (P2);
wherein the angle of rotation (a) between the first position (P1) and the second position (P2) is at least substantially 90°, preferably between substantially 90° and substantially 180°, particularly preferably substantially 180°.

10. The method according to claim 9, wherein the pipette tips (1) for acquiring further images, preferably further one to four images, are rotated into a number of intermediate positions (P3, P4, P5, P6) corresponding to the number of further images, which intermediate positions (P3, P4, P5, P6) are located between the first position (P1) and the second position (P2) and are preferably evenly distributed between the first position (P1) and the second position (P2).

11. The method according to one of the preceding claims,
wherein the pipette tips (1) are each held non-positively on the pick-up elements (11) of the holding device (10), preferably by applying negative pressure to the pipette tips (1).

12. The method according to any one of the preceding claims,
wherein the data processing system (70) comprises a user interface (71), and the method additionally comprises a method step:
h) selecting at least one pick-up element (11) of the holding device (10) by a user, wherein the pipette tips (1) held on the selected pick-up elements (11) are discarded as rejects as a result of the selection independently of the acquired first and second image data in step f);
wherein step h) is performed prior to any of steps a) through f).

13. An apparatus (100) for inspecting pipette tips (1) each extending along a longitudinal axis (L), in particular adapted to carry out a method according to any one of the preceding claims, the apparatus (100) comprising:
- A receiving position (101) configured to provide a first carrier (20) containing pipette tips (1);
- A holding device (10) for picking up pipette tips (1) from the first carrier (20) provided at the receiving position (101), the holding device (10) comprising a plurality of pick-up elements (11), which pick-up elements (11) are configured for receiving one pipette tip (1) each;
- A first image acquisition device (30) for acquiring first image data of the respective pipette tip outlet openings (2) of the pipette tips (1) picked up by the holding device (10);
- A second image acquisition device (40) for acquiring second image data of the pipette tips (1) held in the holding device (10);
- A data processing system (70) which is signal-conductively connected to the first image acquisition device (30), the second image acquisition device (40) and the holding device (10), and in which allowable limits for the first and/or second image data are predefined;
- A waste container (50) configured to receive pipette tips (1) discarded by the holding device (10);
- A dispensing position (102) on which a second carrier (20'), in particular a rack (20, 20'), can be provided;
the apparatus (100) comprising means (12) for aligning the optical axis (OA1) of the first image acquisition device (30) parallel to the respective longitudinal axis (L) of the pipette tips (1) held in the holding device (10) and onto the respective pipette tip outlet openings (2), and for aligning the optical axis (OA2) of the second image acquisition device (40) transverse to the respective longitudinal axis (L) of the pipette tips (1) held in the holding device (10) and onto the partial segments of the respective pipette tip jacket surfaces (3) of the held pipette tips (1) facing the second image acquisition device (40), said holding device (10) being movable back and forth between said receiving position (101), said first image acquisition device (30), said second image acquisition device (40), said waste container (50) and/or said dispensing position (102).

14. The apparatus (100) according to claim 13, wherein
- the pipette tips (1) are arranged in the first carrier (20) in a first matrix arrangement (M1) of rows and columns, in particular the first carrier (20) is a first rack (21);
- the holding device (10) is configured to pick up a row or column of pipette tips (1) from the first matrix arrangement (M1) of rows and columns, in particular from the first rack (21), and the pick-up elements (11) of the holding device (10) are arranged in a row, the longitudinal axes (L) of the pipette tips (1) held by the pick-up elements (11) lying substantially in a common plane (E);
- the second carrier (20'), in particular the rack (21, 21') has a plurality of holes (22) in a second matrix arrangement (M2) of rows and columns, which holes (22) are suitable for holding the pipette tips (1);
- the means (12) for aligning the optical axis (OA2) of the second image acquisition device (40) are configured to align the optical axis (OA2) of the second image acquisition device (40) substantially perpendicular to the plane (E) defined by the held pipette tips (1); and
- wherein the holding device (10) is adapted for successively filling the respective rows or columns of holes (22) of the second carrier (20') with pipette tips (1) without leaving one or more empty holes (22, 22') between two dispensed pipette tips (1, 1').

15. The apparatus (100) according to claim 13, wherein the pipette tips (1) are arranged in a circular array (K) in the first carrier (20), and wherein the arrangement of the pick-up elements (11) of the holding device (10) corresponds to the circular array (K) of the pipette tips (1) in the first carrier (20).

16. The apparatus (100) according to claim 15, wherein the holding device (10) comprises means (121) for rotating the holding device (10) about its axis of rotation (A) extending in the direction of the pipette tips (1) picked up by the holding device (10).

17. The apparatus (100) according to claim 15 or 16, wherein said holding device (10) comprises
- an illumination device (44) fixed to the holding device (10) and dividing the circular array (K) of pipette tips (1) into two halves (K1, K2), the illumination device (44) having two plane-parallel light emitting surfaces (44a, 44b) for emitting light in opposite directions; or
- an illumination device (45) fixed to the holding device (10) and arranged in the center of the circular array (K) of pipette tips (1), for emitting light in the direction of the second image acquisition device (40), the illumination device (45) being designed in particular in the form of a cylinder with a circumferential light emission surface (45a).

18. The apparatus (100) according to any one of claims 13 to 17, wherein the apparatus (100) further comprises a measuring device (31), in particular a light barrier (31), for detecting the entry of the respective pipette tips (1), in particular the respective pipette tip outlet openings (2), into the optical axis (OA1) of the first image acquisition device (30), which measuring device (31) is connected in a signal-conducting manner to the first image acquisition device (30) and is configured to trigger the acquisition of the first image data by the first image acquisition device (30).

19. The apparatus (100) according to any one of claims 13 to 18, wherein the holding device (10) comprises means (13) for rotating the pipette tips (1) held in the holding device (10) about their longitudinal axis (L), which means (13) are configured to rotate the pipette tips (1) from a first position (P1) to a second position (P2) through a rotation angle (a) of at least substantially 90°, preferably between substantially 90° and substantially 180°, particularly preferably of substantially 180°.

20. The apparatus (100) according to claim 19, wherein the means (13) for rotating the pipette tips (1) held in the holding device (10) comprise:
- A gearwheel (14) on each pick-up element (11), which gearwheels (14) mesh to form a gear train (15) and are rotatable by a rotary drive (16) preferably located at one end of the gear train (15); or
- a gearwheel (14) on each pick-up element (11), two adjacent gearwheels (14, 14') being operatively connected to one another via an intermediate gearwheel (141) to form a gear train (15), at least one of the gearwheels (14) and/or at least one of the intermediate gearwheels (141) of the gear train (15) being rotatable by a rotary drive (16); or
- a gearwheel (14) on each pick-up element (11), which gearwheels (14) do not mesh and are rotatable by a common rack-and-pinion drive (17); or
- a gearwheel (14) on each pick-up element (11), which gearwheels (14) do not mesh and are rotatable by a common toothed belt (142), preferably support means (143) being provided for ensuring the operative connection between the gearwheels (14) and the toothed belt (142); or
- an individual drive (80), in particular an electric motor (80), on each pick-up element (11), wherein each pick-up element (11) is rotatable by the individual drive (80) independently of the remaining pick-up elements (11) of the holding device (10); or
- a disc (91) on each pick-up element (11), which discs (91) are each arranged on the pick-up elements (11) in a rotationally fixed manner in the circumferential direction (U) of the pick-up elements (11) and on which discs (91) a rod drive (90) for converting a reciprocating movement of a drive rod (92) into a rotational movement of the pick-up elements (11) is eccentrically applied in each case.

21. The apparatus (100) according to any one of claims 13 to 20, wherein the means (13) for rotating the pipette tips (1) held in the holding device (10) are configured for rotating the pipette tips (1) into intermediate positions (P3, P4, P5, P6), which intermediate positions (P3, P4, P5, P6) lie between the first position (P1) and the second position (P2) and are preferably distributed uniformly between the first position (P1) and the second position (P2).

22. The apparatus (100) according to claim 14 or any one of claims 18 to 21, wherein the number of pick-up elements (11) of the holding device (10) corresponds to the number of pipette tips (1) provided in a row or column of the first matrix arrangement (M1), wherein the holding device (10) preferably comprises at least 5, preferably at least 10 and more preferably at least 15 pick-up elements (11).

23. The apparatus (100) according to any one of claims 13 to 22, wherein the pick-up elements (11) each comprise a coupling element (18), in particular of conical shape, which is or can be connected in a fluid-conducting manner to a vacuum connection (19) in order to hold the pipette tips (1) on the pick-up elements (11) of the holding device (10) by applying negative pressure.

24. The apparatus (100) according to claim 14 or any one of claims 18 to 23, wherein the pick-up elements (11) of the holding device (10) are configured to be movable with respect to each other so that their position with respect to each other can be adapted to the first matrix arrangement (M1) and/or the second matrix arrangement (M2) of pipette tips.

25. An injection molding machine (200) comprising at least one apparatus (100) for inspecting pipette tips (1) according to any one of claims 13 to 24.

## Revendications

1. Procédé de contrôle de pointes de pipettes (1) s'étendant chacune le long d'un axe longitudinal (L), le procédé comprenant les étapes de procédé suivantes :
a) fournir des pointes de pipette (1) qui sont disposées dans un premier support (20) ;
b) Réception de pointes de pipette (1) à partir du premier support (20) par un dispositif de maintien (10) comprenant une pluralité d'éléments de réception (11) destinés à recevoir chacun une pointe de pipette (1) ;
c) l'acquisition, par un premier dispositif d'acquisition d'images (30), de premières données d'images des ouvertures respectives de sortie de pointe de pipette (2) des pointes de pipette (1) reçues par le dispositif de maintien (10) ;
d) l'acquisition de deuxièmes données d'image des pointes de pipette (1) maintenues dans le dispositif de maintien (10) par un deuxième dispositif d'acquisition d'image (40) dont l'axe optique (OA2) est orienté, pendant l'acquisition des deuxièmes données d'image, transversalement à l'axe longitudinal (L) respectif des pointes de pipette (1) maintenues dans le dispositif de maintien (10) et sur les segments partiels, tournés vers le deuxième dispositif d'acquisition d'image (40), des surfaces d'enveloppe (3) respectives des pointes de pipette (1) maintenues ;
e) déterminer si les premières et/ou deuxièmes données d'image se situent ou non dans des limites d'admissibilité prédéfinies, à l'aide d'un système de traitement de données (70) ;
f) l'éjection, par le dispositif de maintien (10), dans un récipient à déchets (50), des pointes de pipette (1) dont les premières et/ou deuxièmes données d'image déterminées à l'étape e) se situent en dehors des limites d'admissibilité prédéfinies ;
g) distribution des pointes de pipette (1) dont les premières et deuxièmes données d'image déterminées à l'étape e) se situent à l'intérieur des limites d'admissibilité prédéfinies, dans un deuxième support (20'), en particulier dans un rack (21, 21') ;
les deuxièmes données d'image de plusieurs des pointes de pipette (1) maintenues dans le dispositif de maintien (10), de préférence de toutes les pointes de pipette (1) maintenues dans le dispositif de maintien (10), étant saisies simultanément dans l'étape d) du procédé.

2. Procédé selon la revendication 1, dans lequel :
- les pointes de pipette (1) mises à disposition à l'étape a) sont disposées dans le premier support (20) selon un premier agencement matriciel (M1) de rangées et de colonnes, en particulier dans un premier rack (21) ;
- dans l'étape b), une rangée ou une colonne, de préférence une rangée complète ou une colonne complète, de pointes de pipettes (1) provenant du premier agencement de matrice (M1), en particulier du premier rack (21), est reçue par le dispositif de maintien (10), les éléments de réception (11) du dispositif de maintien (10) étant disposés en une rangée, et les axes longitudinaux (L) des pointes de pipettes (1) maintenues par les éléments de réception (11) se trouvant essentiellement dans un plan commun (E) ;
- à l'étape c), l'axe optique (OA1) du premier dispositif de détection d'image est orienté, pendant la détection des premières données d'image, dans le même sens, en particulier parallèlement, par rapport à l'axe longitudinal respectif (L) des pointes de pipette (1) maintenues dans le dispositif de maintien (10) et vers l'ouverture de sortie respective (2) des pointes de pipette ;
- à l'étape d), l'axe optique (OA2) du deuxième dispositif d'acquisition d'image (40) est orienté, pendant l'acquisition des deuxièmes données d'image, essentiellement perpendiculairement au plan (E) défini par les pointes de pipette (1) maintenues, de sorte que toutes les pointes de pipette (1) maintenues dans le dispositif de maintien (10) sont disposées essentiellement dans un plan d'image du deuxième dispositif d'acquisition d'image (40), les deuxièmes données d'image de toutes les pointes de pipette (1) maintenues dans le dispositif de maintien (10) étant acquises simultanément ;
- le second support (20') à l'étape g) comprend une pluralité de trous (22) dans un second agencement matriciel (M2) de rangées et de colonnes, lesquels trous (22) sont adaptés pour maintenir les embouts de pipette distribués (1) ; et
les pointes de pipette (1) étant distribuées dans l'étape g) du procédé par le dispositif de maintien (10) de telle sorte que les rangées ou colonnes respectives de trous (22) du deuxième support (20') sont remplies les unes après les autres, sans qu'il ne reste alors un ou plusieurs trous vides (22, 22') entre deux pointes de pipette (1) distribuées.

3. Procédé selon la revendication 1, dans lequel :
- les pointes de pipette (1) mises à disposition à l'étape a) sont disposées dans le premier support (20) en au moins un agencement circulaire (K), en particulier en au moins un agencement circulaire (K) de huit pointes de pipette (1) régulièrement espacées les unes des autres dans la direction circonférentielle de l'agencement circulaire (K) ;
- à l'étape b), un ensemble circulaire (K), en particulier un ensemble circulaire complet (K), de pointes de pipettes (1) est prélevé sur le premier support (20) par le dispositif de maintien (10) ;
- en option, à l'étape d), le dispositif de maintien (10) est tourné autour de son axe de rotation (A) s'étendant en direction des pointes de pipette (1) reçues par le dispositif de maintien (10) d'un angle de rotation (β) avant la saisie des deuxièmes données d'image, de telle sorte que les contours d'au moins une partie, de préférence de toutes les pointes de pipette (1) maintenues dans le dispositif de maintien (10), de préférence complètement, peuvent être saisis par le deuxième dispositif de saisie d'image (40).

4. Procédé selon la revendication 3, dans lequel, à l'étape d), le dispositif de maintien (10) est tourné autour de son axe de rotation (A) s'étendant en direction des pointes de pipette (1) reçues par le dispositif de maintien (10) pendant l'acquisition des deuxièmes données d'image, en particulier le dispositif de maintien (10) effectue au moins trois quarts de tour autour de son axe de rotation (A) pendant l'acquisition des deuxièmes données d'image, et dans lequel, en option, à l'étape d), les pointes de pipette (1) reçues par le dispositif de maintien (10) sont tournées chacune autour de leur axe longitudinal (L).

5. Procédé selon la revendication 3 ou 4, dans lequel les deuxièmes données d'image des pointes de pipette (1) maintenues dans le dispositif de maintien (10) sont en outre saisies à l'étape d) par un troisième dispositif de saisie d'image (43) dont l'axe optique (OA3) est orienté, pendant la saisie des deuxièmes données d'image, essentiellement perpendiculairement à l'axe optique (OA2) du deuxième dispositif de saisie d'image (40) et sur les segments partiels, tournés vers le troisième dispositif de saisie d'image (43), des surfaces d'enveloppe de pointe de pipette respectives (3) des pointes de pipette (1) maintenues, où, en option, à l'étape d), le dispositif de maintien (10) est tourné, avant la saisie des deuxièmes données d'image, autour de son axe de rotation (A) s'étendant en direction des pointes de pipette (1) reçues par le dispositif de maintien (10), d'un angle de rotation (β) tel que les contours d'une première partie (1a) des pointes de pipette (1) maintenues dans le dispositif de maintien (10), de préférence entièrement, peuvent être saisis par le deuxième dispositif de saisie d'image (40), et en ce que les contours d'une deuxième partie (1b) des pointes de pipette (1) maintenues dans le dispositif de maintien (10) peuvent être saisis, de préférence entièrement, par le troisième dispositif de saisie d'image (43).

6. Procédé selon la revendication 3, dans lequel, pendant l'acquisition des deuxièmes données d'image à l'étape d), l'axe optique (OA2) des deuxièmes moyens d'acquisition d'image (40) est en outre perpendiculaire à un dispositif d'éclairage fixé aux moyens de support (10) et divisant l'ensemble circulaire (K) d'embouts de pipette (1) en deux moitiés (K1, K2), le dispositif d'éclairage (44) comprenant deux surfaces d'émission de lumière sensiblement planes et parallèles (44a, 44b) pour émettre de la lumière dans la direction du deuxième dispositif d'acquisition d'image (40) et dans la direction opposée à celle-ci, dans lequel, à l'étape d)
i. les deuxièmes données d'image d'une moitié (K1) des pointes de pipette (1) sont saisies et le dispositif de maintien (10) est tourné de 180° autour de son axe de rotation (A) s'étendant en direction des pointes de pipette (1) reçues par le dispositif de maintien (10) avant la saisie des deuxièmes données d'image de l'autre moitié (K2) des pointes de pipette (1) ; ou
ii. un autre dispositif de saisie d'image (42) est prévu pour saisir des deuxièmes données d'image des pointes de pipette (1) maintenues dans le dispositif de maintien (10), dont l'axe optique est orienté en sens inverse de l'axe optique (OA2) du deuxième dispositif de saisie d'image (40), les deuxièmes données d'image des deux moitiés (K1, K2) de la disposition circulaire (K) de pointes de pipette (1) étant saisies simultanément.

7. Procédé selon la revendication 4, dans lequel, pendant l'acquisition des secondes données d'image à l'étape d), l'axe optique (OA2) du second moyen d'acquisition d'image (40) est en outre aligné avec un moyen d'éclairage (45) fixé au moyen de support (10) et disposé au centre de l'agencement circulaire (K) d'embouts de pipette (1), lequel moyen d'éclairage (45) émet de la lumière en direction du second moyen d'acquisition d'image (40) lors de l'acquisition des secondes données d'image à l'étape d).

8. Procédé selon l'une des revendications précédentes, dans lequel les premières données d'image sont saisies à l'étape c)lors du déplacement des pointes de pipette (1) maintenues dans le dispositif de maintien (10) transversalement à l'axe optique (OA1) du premier dispositif de saisie d'image (30) et par l'axe optique (OA1) du premier dispositif de saisie d'image (30) les unes par rapport aux autres, l'entrée des pointes de pipettes respectives (1), en particulier des ouvertures de sortie de pointes de pipettes respectives (2), dans l'axe optique (OA1) du premier dispositif de détection d'images (30) étant détectée par un dispositif de mesure (31), en particulier une barrière lumineuse (31), et déclenche la saisie des premières données d'image par le premier dispositif de saisie d'image (30), de préférence seul le dispositif de maintien (10) étant déplacé et le premier dispositif de saisie d'image (30) restant fixe, de préférence les ouvertures de sortie de pointe de pipette (2) respectives des pointes de pipette (1) maintenues dans le dispositif de maintien (10) étant amenées à passer devant le premier dispositif de saisie d'image essentiellement dans un seul plan d'image du premier dispositif de saisie d'image (30).

9. Procédé selon l'une quelconque des revendications précédentes, dans lequel l'étape d) comprend les étapes de procédé suivantes :
i. enregistrer une première image des pointes de pipette (1) maintenues dans le dispositif de maintien (10), les pointes de pipette (1) se trouvant chacune dans une première position (P1) ;
ii. faire tourner les pointes de pipette (1) maintenues dans le dispositif de maintien (10) autour de leur axe longitudinal (L) d'un angle de rotation prédéterminé (α) dans une deuxième position (P2) ;
iii. enregistrer une deuxième image des pointes de pipette (1) maintenues dans le dispositif de maintien (10), les pointes de pipette (1) se trouvant chacune dans la deuxième position (P2) ;
dans lequel l'angle de rotation (α) entre la première position (P1) et la deuxième position (P2) est au moins sensiblement de 90°, de préférence entre sensiblement 90° et sensiblement 180°, de manière particulièrement préférée sensiblement de 180°.

10. Procédé selon la revendication 9, dans lequel les pointes de pipette (1) sont tournées pour prendre d'autres images, de préférence d'une à quatre images supplémentaires, dans un nombre de positions intermédiaires (P3, P4, P5, P6) correspondant au nombre des autres images, lesquelles positions intermédiaires (P3, P4, P5, P6) sont situées entre la première position (P1) et la deuxième position (P2) et sont de préférence réparties uniformément entre la première position (P1) et la deuxième position (P2).

11. Procédé selon l'une des revendications précédentes, dans lequel les pointes de pipette (1) sont respectivement maintenues par adhérence sur les éléments de réception (11) du dispositif de maintien (10), de préférence en soumettant les pointes de pipette (1) à une dépression.

12. Procédé selon l'une quelconque des revendications précédentes, dans lequel l'installation de traitement de données (70) comprend une interface utilisateur (71) et le procédé comprend en outre une étape de procédé :
h) sélection d'au moins un élément de réception (11) du dispositif de maintien (10) par un utilisateur, les pointes de pipette (1) maintenues sur les éléments de réception (11) sélectionnés étant rejetées en tant que rebut à la suite de la sélection, indépendamment des premières et deuxièmes données d'image saisies à l'étape f) ;
dans lequel l'étape h) est effectuée avant l'une quelconque des étapes a) à f).

13. Dispositif (100) pour contrôler des pointes de pipettes (1) s'étendant chacune le long d'un axe longitudinal (L), conçu en particulier pour la mise en oeuvre d'un procédé selon l'une des revendications précédentes, le dispositif (100) comprenant :
- Une position de réception (101) configurée pour fournir un premier support (20) contenant des pointes de pipette (1) ;
- Un dispositif de maintien (10) pour recevoir des pointes de pipette (1) à partir du premier support (20) mis à disposition à la position de réception (101), le dispositif de maintien (10) comprenant une pluralité d'éléments de réception (11), lesquels éléments de réception (11) sont conçus pour recevoir chacun une pointe de pipette (1) ;
- un premier dispositif d'acquisition d'image (30) pour acquérir des premières données d'image des ouvertures de sortie d'embout de pipette respectives (2) des embouts de pipette (1) reçus par le dispositif de maintien (10) ;
- un deuxième dispositif d'acquisition d'images (40) pour acquérir des deuxièmes données d'images des pointes de pipettes (1) maintenues dans le dispositif de maintien (10) ;
- Un système de traitement de données (70) qui est relié par conduction de signaux au premier dispositif d'acquisition d'images (30), au deuxième dispositif d'acquisition d'images (40) et au dispositif de maintien (10), et dans lequel des limites d'admissibilité sont prédéfinies pour les premières et/ou les deuxièmes données d'image ;
- un récipient à déchets (50) conçu pour recevoir les pointes de pipettes (1) éjectées par le dispositif de maintien (10) ;
- une position de distribution (102), sur laquelle un deuxième support (20'), en particulier un rack (20, 20'), peut être mis à disposition ;
dans lequel le dispositif (100) comprend des moyens (12) pour aligner l'axe optique (OA1) du premier dispositif d'imagerie (30) parallèlement à l'axe longitudinal respectif (L) des pointes de pipette (1) maintenues dans le dispositif de maintien (10) et sur les ouvertures de sortie de pointe de pipette respectives (2) et pour aligner l'axe optique (OA2) du deuxième dispositif de détection d'image (40) transversalement à l'axe longitudinal (L) respectif des pointes de pipette (1) maintenues dans le dispositif de maintien (10) et sur les segments partiels, tournés vers le deuxième dispositif de détection d'image (40), des surfaces d'enveloppe (3) respectives des pointes de pipette (1) maintenues, le dispositif de maintien (10) pouvant être déplacé en va-et-vient entre la position de réception (101), le premier dispositif de détection d'image (30), le deuxième dispositif de détection d'image (40), le récipient à déchets (50) et/ou la position de distribution (102).

14. Dispositif (100) selon la revendication 13, dans lequel
- les pointes de pipette (1) sont disposées dans le premier support (20) selon un premier agencement matriciel (M1) de rangées et de colonnes, en particulier le premier support (20) est un premier rack (21) ;
- le dispositif de maintien (10) est conçu pour recevoir une rangée ou une colonne de pointes de pipettes (1) provenant du premier agencement matriciel (M1) de rangées et de colonnes, en particulier du premier rack (21), et les éléments de réception (11) du dispositif de maintien (10) sont disposés en une rangée, les axes longitudinaux (L) des pointes de pipettes (1) maintenues par les éléments de réception (11) se trouvant essentiellement dans un plan commun (E) ;
- le deuxième support (20'), en particulier le rack (21, 21'), comprend une pluralité de trous (22) dans un deuxième agencement matriciel (M2) de rangées et de colonnes, lesquels trous (22) sont adaptés pour maintenir les pointes de pipette (1) ;
- les moyens (12) pour orienter l'axe optique (OA2) du deuxième dispositif d'acquisition d'image (40) sont conçus pour orienter l'axe optique (OA2) du deuxième dispositif d'acquisition d'image (40) sensiblement perpendiculairement au plan (E) défini par les pointes de pipette (1) maintenues ; et
- le dispositif de maintien (10) étant conçu pour remplir successivement les rangées ou colonnes respectives de trous (22) du deuxième support (20') avec des pointes de pipette (1), sans qu'il ne reste alors un ou plusieurs trous vides (22, 22') entre deux pointes de pipette (1, 1') distribuées.

15. Dispositif (100) selon la revendication 13, dans lequel les pointes de pipette (1) sont disposées dans le premier support (20) selon une disposition circulaire (K), et dans lequel la disposition des éléments de réception (11) du dispositif de retenue (10) correspond à la disposition circulaire (K) des pointes de pipette (1) dans le premier support (20).

16. Dispositif (100) selon la revendication 15, dans lequel le dispositif de maintien (10) comporte des moyens (121) pour faire tourner le dispositif de maintien (10) autour de son axe de rotation (A) s'étendant en direction des pointes de pipettes (1) reçues par le dispositif de maintien (10).

17. Dispositif (100) selon la revendication 15 ou 16, dans lequel le dispositif de maintien (10)
- comprend un dispositif d'éclairage (44) fixé au dispositif de maintien (10) et divisant l'agencement circulaire (K) de pointes de pipettes (1) en deux moitiés (K1, K2), le dispositif d'éclairage (44) présentant deux surfaces d'émission de lumière (44a, 44b) à faces planes et parallèles pour émettre de la lumière dans des directions opposées ; ou
- un dispositif d'éclairage (45) fixé au dispositif de maintien (10) et disposé au centre de l'agencement circulaire (K) de pointes de pipettes (1) pour émettre de la lumière en direction du deuxième dispositif de saisie d'image (40), le dispositif d'éclairage (45) étant en particulier de forme cylindrique avec une surface d'émission de lumière (45a) périphérique.

18. Dispositif (100) selon l'une des revendications 13 à 17, le dispositif (100) comprenant en outre un dispositif de mesure (31), en particulier une barrière photoélectrique (31), pour détecter l'entrée des pointes de pipette respectives (1), en particulier des ouvertures de sortie de pointe de pipette respectives (2), dans l'axe optique (OA1) du premier dispositif d'acquisition d'image (30), lequel dispositif de mesure (31) est relié par conduction de signaux au premier dispositif d'acquisition d'image (30) et est conçu pour déclencher la saisie des premières données d'image par le premier dispositif d'acquisition d'image (30).

19. Dispositif (100) selon l'une des revendications 13 à 18, dans lequel le dispositif de maintien (10) comporte des moyens (13) pour faire tourner les pointes de pipette (1) maintenues dans le dispositif de maintien (10) autour de leur axe longitudinal (L), lesquels moyens (13) sont configurés pour faire tourner les pointes de pipette (1) d'une première position (P1) à une deuxième position (P2) d'un angle de rotation (α) d'au moins sensiblement 90°, de préférence entre sensiblement 90° et sensiblement 180°, de manière particulièrement préférée de sensiblement 180°.

20. Dispositif (100) selon la revendication 19, dans lequel les moyens (13) pour faire tourner les pointes de pipette (1) maintenues dans le dispositif de maintien (10) comprennent :
- une roue dentée (14) sur chaque élément de réception (11), lesquelles roues dentées (14) s'engrènent pour former un ensemble de roues dentées (15) et peuvent être mises en rotation par un entraînement rotatif (16) disposé de préférence à une extrémité de l'ensemble de roues dentées (15) ; ou
- une roue dentée (14) sur chaque élément de réception (11), deux roues dentées (14, 14') voisines étant respectivement en liaison active l'une avec l'autre par l'intermédiaire d'une roue dentée intermédiaire (141) en formant un ensemble de roues dentées (15), au moins l'une des roues dentées (14) et/ou au moins l'une des roues dentées intermédiaires (141) de l'ensemble de roues dentées (15) pouvant être tournée par un entraînement rotatif (16) ; ou
- une roue dentée (14) sur chaque élément de réception (11), lesquelles roues dentées (14) ne s'engrènent pas et peuvent être tournées par un entraînement à crémaillère commun (17) ; ou
- une roue dentée (14) sur chaque élément de réception (11), lesquelles roues dentées (14) ne s'engrènent pas et peuvent être mises en rotation par une courroie dentée commune (142), des moyens de support (143) étant de préférence prévus pour assurer la liaison fonctionnelle entre les roues dentées (14) et la courroie dentée (142) ; ou
- un entraînement individuel (80), en particulier un moteur électrique (80), sur chaque élément de réception (11), chaque élément de réception (11) pouvant être tourné par l'entraînement individuel (80) indépendamment des éléments de réception restants (11) du dispositif de retenue (10) ; ou
- un disque (91) sur chaque élément de réception (11), lesquels disques (91) sont disposés respectivement dans la direction périphérique (U) des éléments de réception (11) de manière à ne pas pouvoir tourner sur les éléments de réception (11) et sur lesquels disques (91) s'applique respectivement de manière excentrée un entraînement à tige (90) pour transformer un mouvement de va-et-vient d'une tige d'entraînement (92) en un mouvement de rotation des éléments de réception (11).

21. Dispositif (100) selon l'une des revendications 13 à 20, dans lequel les moyens (13) pour faire tourner les pointes de pipette (1) maintenues dans le dispositif de maintien (10) sont conçus pour faire tourner les pointes de pipette (1) dans des positions intermédiaires (P3, P4, P5, P6), lesquelles positions intermédiaires (P3, P4, P5, P6) sont situées entre la première position (P1) et la deuxième position (P2) et sont de préférence réparties uniformément entre la première position (P1) et la deuxième position (P2).

22. Dispositif (100) selon la revendication 14 ou l'une des revendications 18 à 21, dans lequel le nombre d'éléments de réception (11) du dispositif de maintien (10) correspond au nombre d'embouts de pipette (1) mis à disposition dans une rangée ou une colonne du premier agencement matriciel (M1), le dispositif de maintien (10) comprenant de préférence au moins 5, de préférence au moins 10 et encore mieux au moins 15 éléments de réception (11).

23. Dispositif (100) selon l'une des revendications 13 à 22, dans lequel les éléments de réception (11) comprennent chacun un appendice de couplage (18), en particulier de forme conique, qui est ou peut être relié par conduction de fluide à un raccord de vide (19), afin de maintenir les pointes de pipette (1) sur les éléments de réception (11) du dispositif de maintien (10) en les soumettant à une dépression.

24. Dispositif (100) selon la revendication 14 ou l'une des revendications 18 à 23, dans lequel les éléments de réception (11) du dispositif de maintien (10) sont conçus mobiles les uns par rapport aux autres, de sorte que leur position les uns par rapport aux autres peut être adaptée au premier agencement matriciel (M1) et/ou au deuxième agencement matriciel (M2) de pointes de pipettes.

25. Installation de moulage par injection (200) comprenant au moins un dispositif (100) de contrôle de pointes de pipettes (1) selon l'une des revendications 13 à 24.
